(19) Europäisches Patentamt / European Patent Office / Office européen des brevets

(11) **EP 3 512 203 B1**

(12) **EUROPEAN PATENT SPECIFICATION**

(45) Date of publication and mention of the grant of the patent:
**25.10.2023 Bulletin 2023/43**

(21) Application number: **19158894.6**

(22) Date of filing: **21.06.2013**

(51) International Patent Classification (IPC):
**H04N 19/98** (2014.01)    **H04N 19/86** (2014.01)
**H04N 19/70** (2014.01)    **H04N 19/46** (2014.01)

(52) Cooperative Patent Classification (CPC):
**H04N 19/98; H04N 19/70; H04N 19/86;** H04N 19/46

(54) **IMAGE PROCESSING DEVICE AND METHOD**

BILDVERARBEITUNGSVORRICHTUNG UND -VERFAHREN

DISPOSITIF ET PROCÉDÉ DE TRAITEMENT D'IMAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.06.2012 JP 2012147885**
**22.08.2012 JP 2012183164**

(43) Date of publication of application:
**17.07.2019 Bulletin 2019/29**

(62) Document number(s) of the earlier application(s) in accordance with Art. 76 EPC:
**13809522.9 / 2 869 558**

(73) Proprietor: **Saturn Licensing LLC**
**New York, NY (US)**

(72) Inventors:
• **HATTORI, Shinobu**
  **Minato-ku, Tokyo 108-0075 (JP)**
• **HAMADA, Toshiya**
  **Minato-ku, Tokyo 108-0075 (JP)**

(74) Representative: **D Young & Co LLP**
**120 Holborn**
**London EC1N 2DY (GB)**

(56) References cited:
EP-A2- 1 845 704    WO-A1-2012/071235
WO-A2-2012/012489

• **ZICONG MAI ET AL: "Optimizing a Tone Curve for Backward-Compatible High Dynamic Range Image and Video Compression", IEEE TRANSACTIONS ON IMAGE PROCESSING, IEEE SERVICE CENTER, PISCATAWAY, NJ, US, vol. 20, no. 6, 1 June 2011 (2011-06-01), pages 1558-1571, XP011411814, ISSN: 1057-7149, DOI: 10.1109/TIP.2010.2095866**
• **LAURENCE MEYLAN ET AL: "Tone mapping for high dynamic range displays", PROCEEDINGS OF SPIE, S P I E - INTERNATIONAL SOCIETY FOR OPTICAL ENGINEERING, US, vol. 6492, 29 January 2007 (2007-01-29), pages 649210-1, XP002581500, ISSN: 0277-786X ISBN: 978-1-62841-730-2**
• **TOURAPIS A M ET AL: "H.264/14496-10 AVC Reference Software Manual Update", 31. JVT MEETING; 89. MPEG MEETING; 28-6-2009 - 3-7-2009; LONDON, ;(JOINT VIDEO TEAM OF ISO/IEC JTC1/SC29/WG11 AND ITU-T SG.16 ),, no. JVT-AE010, 30 June 2009 (2009-06-30), XP030007472,**
• **LARBIER P ET AL: "tm-avc0522r6: TS 102 154-1", DVB, DIGITAL VIDEO BROADCASTING, C/O EBU - 17A ANCIENNE ROUTE - CH-1218 GRAND SACONNEX, GENEVA - SWITZERLAND , no. 6 11 April 2012 (2012-04-11), XP017838928, Retrieved from the Internet: URL:https://www.dvb.org/resources/restrict ed/members/documents/TM-AVC/102154-1%20 Cor e%20Functions%20-%20r6.doc [retrieved on 2012-04-11]**

**Description**

TECHNICAL FIELD

The present disclosure relates to an image processing device and method and, more particularly, relates to an image processing device and method which can accurately reproduce a dynamic range of an image.

BACKGROUND ART

In recent years, devices are spreading that handle image information as digital information, and, in this case, compress and encode images by adopting an encoding technique of utilizing redundancy unique to image information and performing compression by orthogonal transform such as discrete cosine transform or motion compensation to transmit and accumulate high-efficiency information. This encoding technique is, for example, MPEG (Moving Picture Experts Group), H.264 or MPEG-4 Part 10 (Advanced Video Coding which is referred to as "AVC" below).

At present, to achieve higher encoding efficiency than that of H.264/AVC, an encoding technique called HEVC (High Efficiency Video Coding) is being developed as a standard by JCTVC (Joint Collaboration Team - Video Coding), which is a joint standardization organization of ITU-T and ISO/IEC (see Non Patent Literature 1).

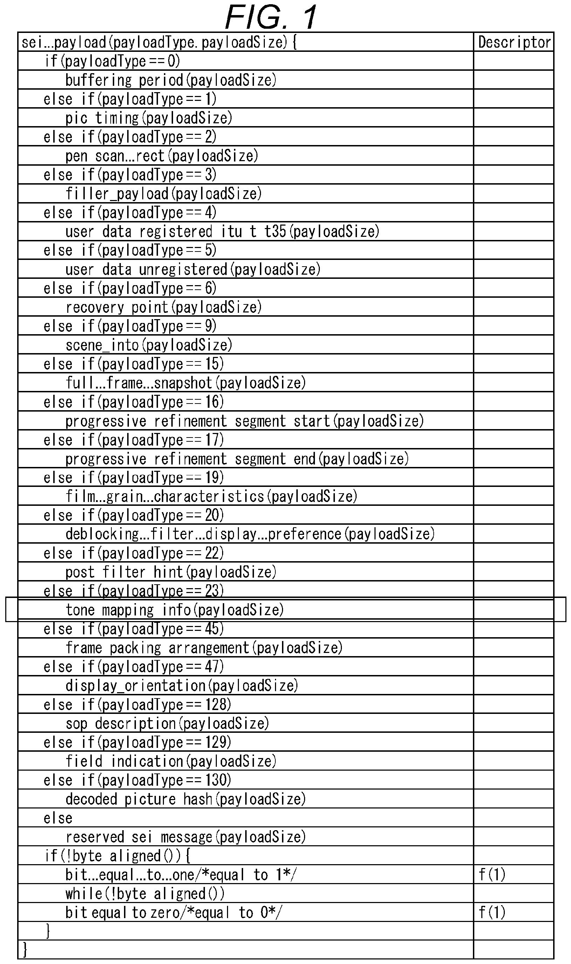

In a draft of HEVC at a current point of time, tone mapping information is transmitted in SEI (Supplemental Enhancement Information) illustrated in Fig. 1.

Content of this tone mapping information is the same as that standardized in AVC as illustrated in Fig. 2 (see Non Patent Literature 2).

CITATION LIST

NON-PATENT DOCUMENT

Non-Patent Document 1: Benjamin Bross, Woo-Jin Han, Jens-Rainer Ohm, Gary J. Sullivan, Thomas Wiegand," High efficiency video coding (HEVC) text specification draft 7", JCTVC-I1003 ver5, 2012.6.12
Non-Patent Document 2: D.1.24 of Rec. ITU-T H.264 | ISO/IEC 14496-10
Non-Patent Document 3: Zicong Mai, et al: "Optimizing a Tone Curve for Backward Compatible High Dynamic Range Image and Video Compression", IEEE TRANSACTIONS ON IMAGE PROCESSING, PISCATAWAY, NJ, US, vol. 20, no. 6, 1 June 2011 (2011-06-01 ), pages 1558-1571
Patent Document 1: EP 1 845 704 A2

SUMMARY OF THE INVENTION

PROBLEMS TO BE SOLVED BY THE INVENTION

Lately, cameras and displays can capture or display images of a high dynamic range.

In such a situation, although widening a dynamic range of a decoded image is requested to display images of various dynamic ranges, a dynamic range of a decoded image is not defined in Non Patent Literature 1.

In light of this situation, the present disclosure can accurately reproduce a dynamic range of an image.

SOLUTIONS TO PROBLEMS

The invention is set out in the appended set of claims.

An image processing device according to a first aspect of the present disclosure has: an encoding unit which performs an encoding operation on an image and generates a bit stream; a setting unit which sets dynamic range characteristics information which indicates characteristics of a dynamic range to be assigned to a developed image, to a captured image; and a transmitting unit which transmits the bit stream generated by the encoding unit and the dynamic range characteristics information set by the setting unit.

The setting unit can set code information which indicates a code of the dynamic range to be assigned to the developed image, to the captured image as the dynamic range characteristics information.

The setting unit can set code information which indicates the code to be assigned to the developed image, to a white level of the captured image as the dynamic range characteristics information.

The setting unit can set white level code information which indicates the code to be assigned to the developed image, to the white level of the captured image as the dynamic range characteristics information.

The setting unit can set maximum white level code information which indicates a maximum value of the code to be assigned to a white level of the developed image, as the dynamic range characteristics information.

The setting unit can set black level code information which indicates a code of a black level of the developed image, as the dynamic range characteristics information.

The setting unit can set gray level code information which indicates a code of a gray level of the developed image, as the dynamic range characteristics information.

The setting unit can set maximum white level information which indicates a maximum value of a white level of the captured image, as the dynamic range characteristics information.

The setting unit can set information which indicates a range of luminance of a region of interest of an image obtained by performing a decoding operation on the bit stream as the dynamic range characteristics information.

The setting unit can set information which indicates a position and an offset of a region of interest of an image obtained by performing a decoding operation on the bit stream as the dynamic range characteristics information.

The transmitting unit can transmit the dynamic range characteristics information as auxiliary information used to display the image obtained by performing the decoding operation on the bit stream.

The transmitting unit can transmit the dynamic range characteristics information as extended auxiliary information obtained by extending existing auxiliary information.

The transmitting unit can transmit the dynamic range characteristics information as tone_mapping_information SEI (Supplemental enhancement information).

The transmitting unit can extend model_id used to transmit the dynamic range characteristics information by targeting at the tone_mapping_information SEI, and transmit the dynamic range characteristics information as SEI.

The transmitting unit can transmit the dynamic range characteristics information as VUI (Video Usability Information) which indicates usability of the image by a sequence.

The encoding unit can perform the encoding operation on the image according to an encoding technique compliant with AVC/H.264.

An image processing method according to a first aspect of the present disclosure includes: performing an encoding operation on an image and generating a bit stream; setting dynamic range characteristics information which indicates characteristics of a dynamic range to be assigned to a developed image, to a captured image; and transmitting the generated bit stream and the set dynamic range characteristics information.

An image processing device according to a second aspect of the present disclosure has: a decoding unit which performs a decoding operation on a bit stream and generates an image; and an image adjusting unit which uses dynamic range characteristics information which indicates characteristics of a dynamic range to be assigned to a developed image, to a captured image, and adjusts the dynamic range of the image generated by the decoding unit.

The image processing device further has a receiving unit which receives the bit stream and the characteristics information, and the decoding unit can perform the decoding operation on the bit stream received by the receiving unit and the image adjusting unit can use the dynamic range characteristics information received by the receiving unit, and adjust the dynamic range of the image generated by the decoding unit.

An image processing method according to a second aspect of the present disclosure includes: performing a decoding operation on a bit stream, and generating an image; and using dynamic range characteristics information which indicates characteristics of a dynamic range to be assigned to a developed image, to a captured image, and adjusting the dynamic range of the generated image.

In the first aspect of the present disclosure, an encoding operation on an image is performed and a bit stream is generated, and dynamic range characteristics information which indicates characteristics of a dynamic range to be assigned to a developed image is set to a captured image. Further, the generated bit stream and the set dynamic range characteristics information are transmitted.

In the second aspect of the present disclosure, a decoding operation on a bit stream is performed, and an image is generated. Further, dynamic range characteristics information which indicates characteristics of a dynamic range to be assigned to a developed image is used to a captured image, and the dynamic range of the generated image is adjusted.

In addition, the above image processing device may be an independent device or may be an internal block which forms one image encoding device or image decoding device.

EFFECTS OF THE INVENTION

According to a first aspect of the present disclosure, it is possible to encode images. Particularly, it is possible to accurately reproduce a dynamic range of an image.

According to a second aspect of the present disclosure, it is possible to decode images. Particularly, it is possible to accurately reproduce a dynamic range of an image.

BRIEF DESCRIPTION OF DRAWINGS

Fig. 1 is a view illustrating an example of a SEI syntax.

Fig. 2 is a view illustrating an example of a tone mapping SEI syntax.

Fig. 3 is a block diagram illustrating an example structure of a first embodiment of an encoding device to which the present technique is applied.

Fig. 4 is a block diagram illustrating an example structure of an encoding unit in Fig. 1.

Fig. 5 is a view for explaining characteristics information of a dynamic range.

Fig. 6 is a view for explaining characteristics information of a dynamic range.

Fig. 7 is a view for explaining characteristics information of a dynamic range.

Fig. 8 is a view illustrating an example of a tone mapping SEI syntax.

Fig. 9 is a view illustrating another example of a tone mapping SEI syntax.

Fig. 10 is a view illustrating a table of meanings of indicators indicated by camera sensitivity and an exposure index.

Fig. 11 is a view illustrating an example of a luminance dynamic range SEI syntax.

Fig. 12 is a view illustrating an example of a VUI syntax.

Fig. 13 is a view illustrating another example of a VUI syntax.

Fig. 14 is a view illustrating another example of a VUI syntax.

Fig. 15 is a view for explaining a syntax of characteristics information of a dynamic range.

Fig. 16 is a flowchart for explaining a generating operation of the encoding device in Fig. 3.

Fig. 17 is a flowchart for explaining details of an encoding operation in Fig. 16.

Fig. 18 is a flowchart for explaining details of the encoding operation in Fig. 16.

Fig. 19 is a block diagram illustrating an example structure of the first embodiment of a decoding device to which the present technique is applied.

Fig. 20 is a block diagram illustrating an example structure of a decoding unit in Fig. 19.

Fig. 21 is a flowchart for explaining a display operation of the decoding device in Fig. 19.

Fig. 22 is a flowchart for explaining details of the decoding operation in Fig. 21.

Fig. 23 is a block diagram illustrating an example structure of a second embodiment of an encoding device to which the present technique is applied.

Fig. 24 is a block diagram illustrating an example structure of an encoding unit in Fig. 23.

Fig. 25 is a block diagram illustrating an example structure of the second embodiment of a decoding device to which the present technique is applied.

Fig. 26 is a block diagram illustrating an example structure of a decoding unit in Fig. 25.

Fig. 27 is a view illustrating an example of a multi-view image encoding technique.

Fig. 28 is a view illustrating a main example structure of a multi-view image encoding device to which the present disclosure is applied.

Fig. 29 is a view illustrating a main example structure of a multi-view image encoding device to which the present disclosure is applied.

Fig. 30 is a view illustrating an example of a hierarchical image encoding technique.

Fig. 31 is a view illustrating a main example structure of a hierarchical image encoding device to which the present disclosure is applied.

Fig. 32 is a view illustrating a main example structure of a hierarchical image decoding device to which the present disclosure is applied.

Fig. 33 is a block diagram illustrating a main example structure of a computer.

Fig. 34 is a block diagram illustrating an example of a schematic structure of a television device.

Fig. 35 is a block diagram illustrating an example of a schematic structure of a portable telephone device.

Fig. 36 is a block diagram illustrating an example of a schematic structure of a recording/reproducing device.

Fig. 37 is a block diagram illustrating an example of a schematic structure of an imaging device.

MODE FOR CARRYING OUT THE INVENTION

The following is a description of modes for carrying out the present technique (hereinafter referred to as embodiments). Explanation will be made in the following order.

1. First Embodiment (Encoding/Decoding Device according to HEVC Technique)

2. Second Embodiment (Encoding/Decoding Device according to AVC Technique)

3. Third Embodiment (Multi-View Image Encoding/Multi-View Image Decoding Device)

4. Fourth Embodiment (Hierarchical Image Encoding/Hierarchical Image Decoding Device)
5. Fifth Embodiment (Computer)
6. Application Example

<First Embodiment>

[Example Structure of a First Embodiment of an Encoding Device]

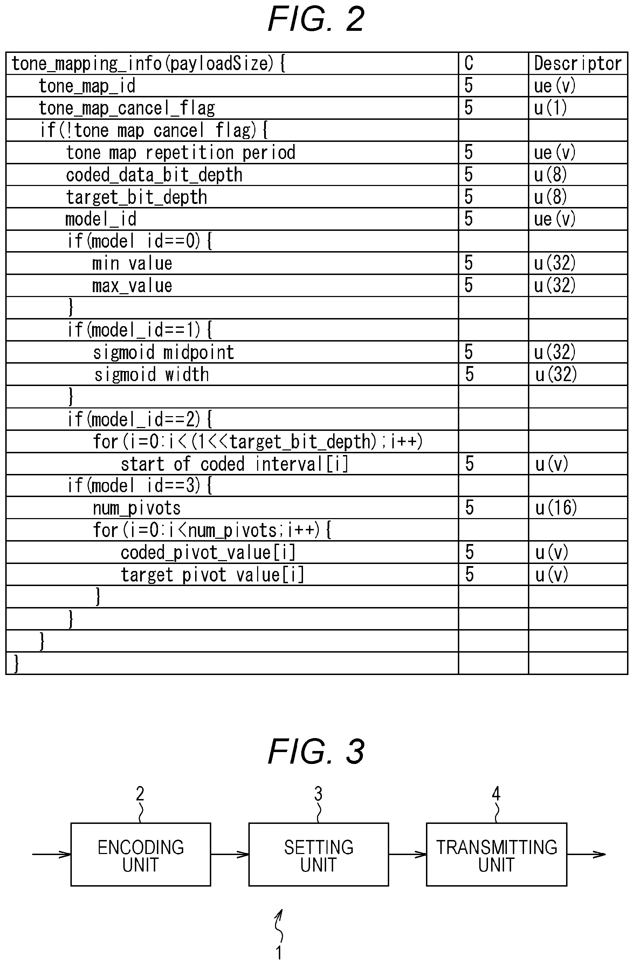

Fig. 3 is a block diagram illustrating an example structure according to a first embodiment of an encoding device as an image processing device to which the present technique is applied.

An encoding device 1 in Fig. 3 has an encoding unit 2, a setting unit 3 and a transmitting unit 4, and encodes images such as captured images according to a HEVC technique.

More specifically, the encoding unit 2 of the encoding device 1 receives as an input signal an input of an image such as a frame-based captured image. The encoding unit 2 encodes the input signal according to the HEVC technique, and supplies the resultant encoded data to the setting unit 3.

The setting unit 3 sets SPS (Sequence Parameter Set), PPS (Picture Parameter Set), VUI (Video Usability Information) which indicates characteristics (usability) of an image corresponding to encoded data per sequence and SEI (Supplemental Enhancement Information). The setting unit 3 generates an encoded stream from the set SPS, PPS, VUI and SEI and the encoded data supplied from the encoding unit 2. The setting unit 3 supplies the encoded stream to the transmitting unit 4.

The transmitting unit 4 transmits the encoded stream supplied from the setting unit 3, to a decoding device described below.

[Example Structure of an Encoding Unit]

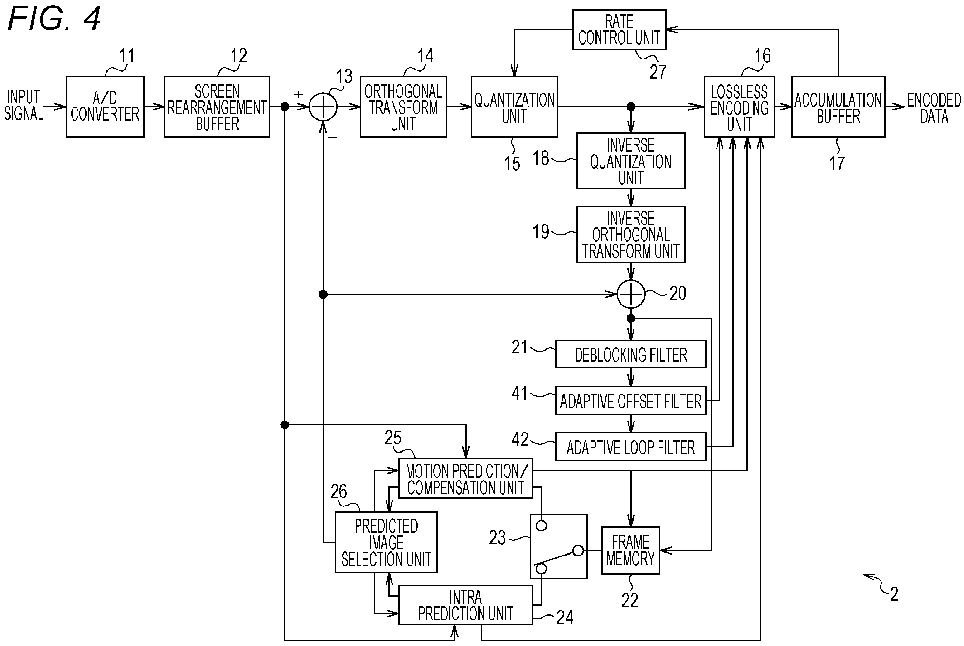

Fig. 4 is a block diagram illustrating an example structure of the encoding unit 2 in Fig. 3.

The encoding unit 2 in Fig. 4 includes an A/D converter 11, a screen rearrangement buffer 12, an arithmetic operation unit 13, an orthogonal transform unit 14, a quantization unit 15, a lossless encoding unit 16, an accumulation buffer 17, an inverse quantization unit 18, an inverse orthogonal transform unit 19, an addition unit 20, a deblocking filter 21, a frame memory 22, a switch 23, an intra prediction unit 24, a motion prediction/compensation unit 25, a predicted image selection unit 26, and a rate control unit 27.

Further, between the deblocking filter 21 and the frame memory 22, an adaptive offset filter 41 and an adaptive loop filter 42 are provided.

Specifically, the A/D converter 11 of the encoding unit 2 performs an A/D conversion on a frame-based image input as an input signal, and outputs and stores the image into the screen rearrangement buffer 12. The screen rearrangement buffer 12 rearranges the frames of the image stored in displaying order, so that the frames of the image are arranged in encoding order in accordance with the GOP (Group of Pictures) structure, and outputs the rearranged frame-based image to the arithmetic operation unit 13, the intra prediction unit 24, and the motion prediction/compensation unit 25.

The arithmetic operation unit 13 calculates the difference between a predicted image supplied from the predicted image selection unit 26 and an encoding target image output from the screen rearrangement buffer 12 to perform encoding. Specifically, the arithmetic operation unit 13 performs encoding by subtracting a predicted image supplied from the predicted image selection unit 26 from an encoding target image output from the screen rearrangement buffer 12. The arithmetic operation unit 13 outputs the resultant image, as residual error information to the orthogonal transform unit 14. When any predicted image is not supplied from the predicted image selection unit 26, the arithmetic operation unit 13 outputs an image read from the screen rearrangement buffer 12 as the residual error information to the orthogonal transform unit 14.

The orthogonal transform unit 14 performs an orthogonal transform on the residual error information supplied from the arithmetic operation unit 13, and supplies a coefficient obtained as a result of the orthogonal transform to the quantization unit 15.

The quantization unit 15 quantizes the coefficient supplied from the orthogonal transform unit 14. The quantized coefficient is input to the lossless encoding unit 16.

The lossless encoding unit 16 obtains information indicating an optimum intra prediction mode (hereinafter, referred to as "intra prediction mode information") from the intra prediction unit 24. Further, the lossless encoding unit 16 obtains information indicating an optimum inter prediction mode (hereinafter, referred to as "inter prediction mode information"), a motion vector, and information for specifying a reference image from the motion prediction/compensation unit 25. Furthermore, the lossless encoding unit 16 obtains a storage flag, an index or an offset, and type information as offset filter information from the adaptive offset filter 41, and obtains a filter coefficient from the adaptive loop filter 42.

The lossless encoding unit 16 performs lossless encoding, such as variable-length encoding (CAVLC (Context-Adaptive Variable Length Coding), for example) or arithmetic encoding (CABAC (Context-Adaptive Binary Arithmetic Coding), for example), on the quantized coefficient supplied from the quantization unit 15.

Further, the lossless encoding unit 16 performs lossless encoding on intra prediction mode information or inter prediction mode information, a motion vector, information for specifying a reference image, offset filter information and a filter coefficient as encoding information related to encoding. The lossless encoding unit 16 supplies and stores the encoding information and the coefficient subjected to lossless encoding as encoded data into the accumulation buffer 17. In addition, the encoding information subjected to lossless encoding may be header information of the coefficient subjected to lossless encoding.

The accumulation buffer 17 temporarily stores the encoded data supplied from the lossless encoding unit 16. Further, the accumulation buffer 17 supplies the stored encoded data to the setting unit 3 in Fig. 3.

Furthermore, the quantized coefficient which is output from the quantization unit 15 is also input to the inverse quantization unit 18, and after inversely quantized, is supplied to the inverse orthogonal transform unit 19.

The inverse orthogonal transform unit 19 performs an inverse orthogonal transform on the coefficient supplied from the inverse quantization unit 18, and supplies the resultant residual error information to the addition unit 20.

The addition unit 20 adds the residual error information supplied as the decoding target image from the inverse orthogonal transform unit 19 and a predicted image supplied from the predicted image selection unit 26, and obtains a locally decoded image. In addition, if there are no predicted images supplied from the predicted image selection unit 26, the addition unit 20 sets the residual error information supplied from the inverse orthogonal transform unit 19 as a locally decoded image. The addition unit 20 supplies the locally decoded image to the deblocking filter 21, and supplies the locally decoded image to the frame memory 22.

The deblocking filter 21 performs filtering on the locally decoded image supplied from the addition unit 20, to remove block distortions. The deblocking filter 21 supplies the resultant image to the adaptive offset filter 41.

The adaptive offset filter 41 performs an adaptive offset filtering (SAO: Sample adaptive offset) operation of mainly removing ringing from an image after the adaptive deblocking filtering operation performed by the deblocking filter 21.

More specifically, the adaptive offset filter 41 determines a type of the adaptive offset filtering operation per LCU (Largest Coding Unit) which is the largest coding unit, and calculates the offset used for this adaptive offset filtering operation. The adaptive offset filter 41 uses the calculated offset, and performs an adaptive offset filtering operation on the determined type from an image subjected to the adaptive deblocking filtering operation. Further, the adaptive offset filter 41 supplies the image subjected to the adaptive offset filtering operation, to the adaptive loop filter 42.

Furthermore, the adaptive offset filter 41 has a buffer which stores offsets. The adaptive offset filter 41 decides per LCU whether or not an offset used for an adaptive deblocking filtering operation has already been stored in the buffer.

When determining that the offset used for the adaptive deblocking filtering operation has already been stored in the buffer, the adaptive offset filter 41 sets a storage flag which indicates whether or not an offset is stored in the buffer, to a value (1 in this case) which indicates that the offset is stored in the buffer.

Further, the adaptive offset filter 41 supplies per LCU to the lossless encoding unit 16 the storage flag which is set to 1, an index which indicates a storage position of the offset in the buffer and type information which indicates the type of the performed adaptive offset filtering operation.

Meanwhile, when the offset used for the adaptive deblocking filtering operation is not yet stored in the buffer, the adaptive offset filter 41 sequentially stores this offset in the buffer. Further, the adaptive offset filter 41 sets the storage flag to a value (0 in this case) which indicates that the offset is not stored in the buffer. Furthermore, the adaptive offset filter 41 supplies per LCU to the lossless encoding unit 16 the storage flag which is set to 0, the offset and type information.

The adaptive loop filter 42 performs an adaptive loop filter (ALF: Adaptive Loop Filter) operation on the image subjected to the adaptive offset filtering operation supplied from the adaptive offset filter 41 per, for example, LCU. For the adaptive loop filtering operation, for example, an operation using, for example, a two-dimensional wiener filter is used. It goes without saying that a filter other than the wiener filter may be used.

More specifically, the adaptive loop filter 42 calculates per LCU a filter coefficient used for the adaptive loop filtering operation such that a residual error between an original image as an image output from the screen rearrangement buffer 12 and an image after the adaptive loop filtering operation minimize. Further, the adaptive loop filter 42 performs per LCU the adaptive loop filtering operation on the image subjected to the adaptive offset filtering operation using the calculated filter coefficient.

The adaptive loop filter 42 supplies the image subjected to the adaptive loop filtering operation to the frame memory 22. Further, the adaptive loop filter 42 supplies the filter coefficient to the lossless encoding unit 16.

In addition, although the adaptive loop filtering operation is performed per LCU, processing units of the adaptive loop filtering operation are not limited to the LCU. Meanwhile, by integrating processing units of the adaptive offset filter 41 and the adaptive loop filter 42, it is possible to efficiently perform operations.

The image stored in the frame memory 22 is then output as a reference image to the intra prediction unit 24 or the motion prediction/compensation unit 25 through the switch 23.

The intra prediction unit 24 performs an intra prediction operation of all candidate intra prediction modes in tile and slice units using a reference image which is read from the frame memory 22 through the switch 23 and is not filtered by the deblocking filter 21.

Further, the intra prediction unit 24 calculates cost function values (details of which will be described below) of all candidate intra prediction modes based on the image read from the screen rearrangement buffer 12 and a predicted image generated as a result of the intra prediction operation. Furthermore, the intra prediction unit 24 then determines the intra prediction mode with the smallest cost function value to be the optimum intra prediction mode.

The intra prediction unit 24 supplies the predicted image generated in the optimum intra prediction mode and the corresponding cost function value to the predicted image selection unit 26. When notified of selection of the predicted image generated in the optimum intra prediction mode by the predicted image selection unit 26, the intra prediction unit 24 supplies the intra prediction mode information to the lossless encoding unit 16.

It should be noted that a cost function value is also called a RD (Rate Distortion) cost, and is calculated by the technique of High Complexity mode or Low Complexity mode, as specified in the JM (Joint Model), which is the reference software in H.264/AVC, for example.

Specifically, where the High Complexity mode is used as a method of calculating cost function values, operations ending with the lossless encoding are provisionally carried out on all candidate prediction modes, and a cost function value expressed by the following equation (1) is calculated for each of the prediction modes.

$$\mathrm{Cost(Mode)} = D + \lambda \cdot R \qquad\qquad \cdots \ (1)$$

D represents the difference (distortion) between the original image and the decoded image, R represents the bit generation rate including the orthogonal transform coefficient, and $\lambda$ represents the Lagrange multiplier given as the function of a quantization parameter QP.

Where the Low Complexity mode is used as the method of calculating cost function values, on the other hand, decoded images are generated, and header bits such as information indicating a prediction mode are calculated in all the candidate prediction modes. A cost function value expressed by the following equation (2) is then calculated for each of the prediction modes.

$$\mathrm{Cost(Mode)} = D + \mathrm{QPtoQuant(QP)} \cdot \mathrm{Header\_Bit} \qquad \cdots \ (2)$$

D represents the difference (distortion) between the original image and the decoded image, Header_Bit represents the header bit corresponding to the prediction mode, and QPtoQuant is the function given as the function of the quantization parameter QP.

In the Low Complexity mode, decoded images are simply generated in all the prediction modes, and there is no need to perform lossless encoding. Accordingly, the amount of calculation is small.

The motion prediction/compensation unit 25 performs the motion prediction/compensation operation in all candidate inter prediction modes in tile and slice units. More specifically, the motion prediction/compensation unit 25 detects motion vectors of all candidate inter prediction modes in tile and slice units based on the image supplied from the screen rearrangement buffer 12 and the filtered reference image read from the frame memory 22 through the switch 23. Further, the motion prediction/compensation unit 25 performs a compensation operation on the reference image based on this motion vector in the tile and slice units, and generates a predicted image.

In this case, the motion prediction/compensation unit 25 calculates cost function values for all candidate inter prediction modes based on the image and the predicted image supplied from the screen rearrangement buffer 12, and determines the inter prediction mode of the smallest cost function value as the optimum inter prediction mode. Further, the motion prediction/compensation unit 25 supplies the cost function value of the optimum inter prediction mode and the corresponding predicted image to the predicted image selection unit 26. When notified of selection of the predicted image generated in the optimum inter prediction mode by the predicted image selection unit 26, the motion prediction/compensation unit 25 outputs the inter prediction mode information, the corresponding motion vector, and the information for specifying the reference image to the lossless encoding unit 16.

The predicted image selection unit 26 determines a prediction mode of a smaller cost function value of the optimum intra prediction mode and the optimum inter prediction mode as the optimum prediction mode based on the cost function values supplied from the intra prediction unit 24 and the motion prediction/compensation unit 25. Further, the predicted image selection unit 26 then supplies the predicted image in the optimum prediction mode to the arithmetic operation unit 13 and the addition unit 20. The predicted image selection unit 26 also notifies the intra prediction unit 24 or the motion prediction/compensation unit 25 of the selection of the predicted image in the optimum prediction mode.

Based on the encoded data stored in the accumulation buffer 17, the rate control unit 27 controls the quantization operation rate of the quantization unit 15 so as not to cause an overflow or underflow.

[Example of Characteristics Information of a Dynamic Range]

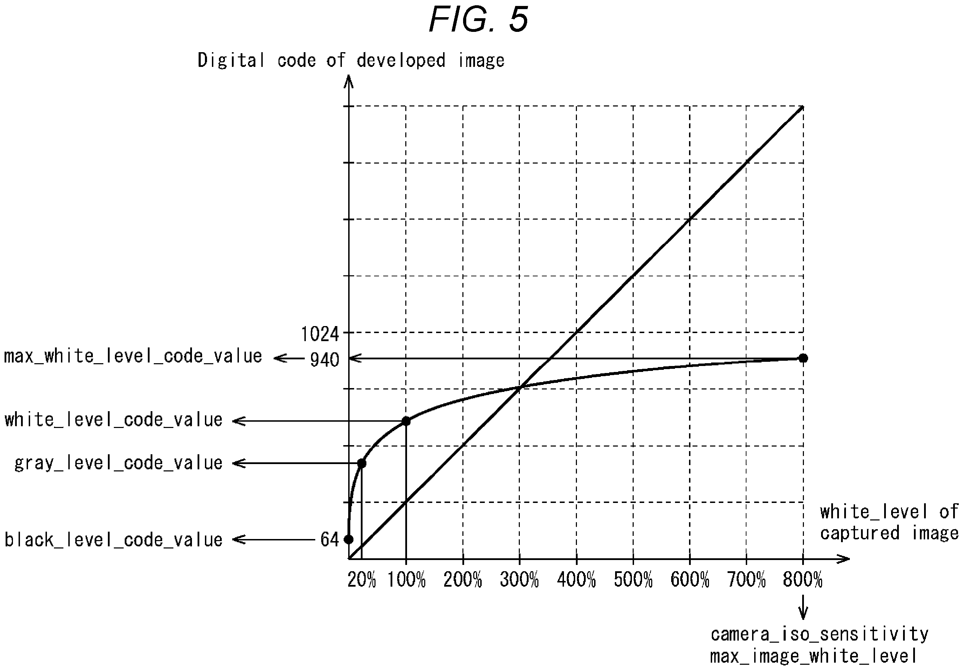

Next, characteristics information of a dynamic range set by the setting unit 3 in Fig. 3 will be described with reference to Fig. 5. In addition, values on the vertical axis and the horizontal axis in Fig. 5 are exemplary, and are not limited to these values.

In the example in Fig. 5, the horizontal axis represents a white level of a captured image. The vertical axis represents a digital code assigned to a developed image. The developed image is an image the gradation of which is represented by the number of bits.

800% on the horizontal axis is a value of camera sensitivity and optimum exposure (at the time of image capturing and at the time of development), and maximum luminance at the time of image capturing. This value is set and transmitted as camera_iso_sensitivity and max_image_white_level which are ones of characteristics information of the dynamic range.

In addition, although values of camera sensitivity and optimum exposure and the maximum luminance at the time of image capturing are the same value in this example, these values are different in some cases.

A value (940) on the vertical axis corresponding to this maximum white level is a digital value of the maximum white level which is assigned to a developed image, and this value is set and transmitted to a decoding side as max_white_level_code_value which is one of characteristics information of the dynamic range.

100% on the horizontal axis is a reference value (white level) of a display. A value on the vertical axis corresponding to this white level is a digital value of the white level (white 100%) which is assigned to a developed image, and this value is set and transmitted to a decoding side as white_level_code_value which is one of characteristics information of the dynamic range.

20% on the horizontal axis is a level (gray level) which is generally used as reference exposure which indicates Gray and in many cases is set to the camera side. A value on the vertical axis corresponding to this gray level is a digital value of the gray level (white 20%) which is assigned to a developed image, and this value is set and transmitted to a decoding side as gray_level_code_value which is one of characteristics information of the dynamic range.

0% on the horizontal axis is a black level. A value (64) on the vertical axis corresponding to this black level is a digital value of the black level (white 0%) which is assigned to a developed image, and this value is set and transmitted to a decoding side as black_level_code_value which is one of characteristics information of the dynamic range.

As described above, code information which indicates a code of the dynamic range to be assigned to a developed image is set to a captured image as characteristics information of the dynamic range and is transmitted to the decoding side. That is, the characteristics information of the dynamic range which indicates characteristics information of the dynamic range to be assigned to a developed image is set to a captured image and is transmitted to the decoding side.

This characteristics information of the dynamic range is indicated by a content creating side and is transmitted to a display side (decoding side) as information which indicates quality of content (information which indicates high quality of information of an image related to a white level indicating that, for example, a dynamic range is wider than that of existing content and information which indicates a high potential of content).

The content creating side has a motivation to provide (a state of) an image intended by a creator. The display side performs an operation of widening (increasing) or narrowing (decreasing) the dynamic range based on this information. Further, by referring to this information, the display side can accurately perform the following operation.

When, for example, receiving an input of an image of a higher dynamic range than display capability of the display side, the display side can perform an operation of decreasing the range using, for example, tone mapping according to the display capability of the display side.

Conversely, when receiving an input of an image of a lower dynamic range than display capability of the display side, the display side can perform an operation of increasing the range using, for example, tone mapping according to the display capability of the display side.

Although, when this information is not provided, the display side needs to analyze a decoded image and perform tone mapping, by transmitting characteristics information of the dynamic range, it is not necessary to analyze a decoded image and accurately adjust the dynamic range.

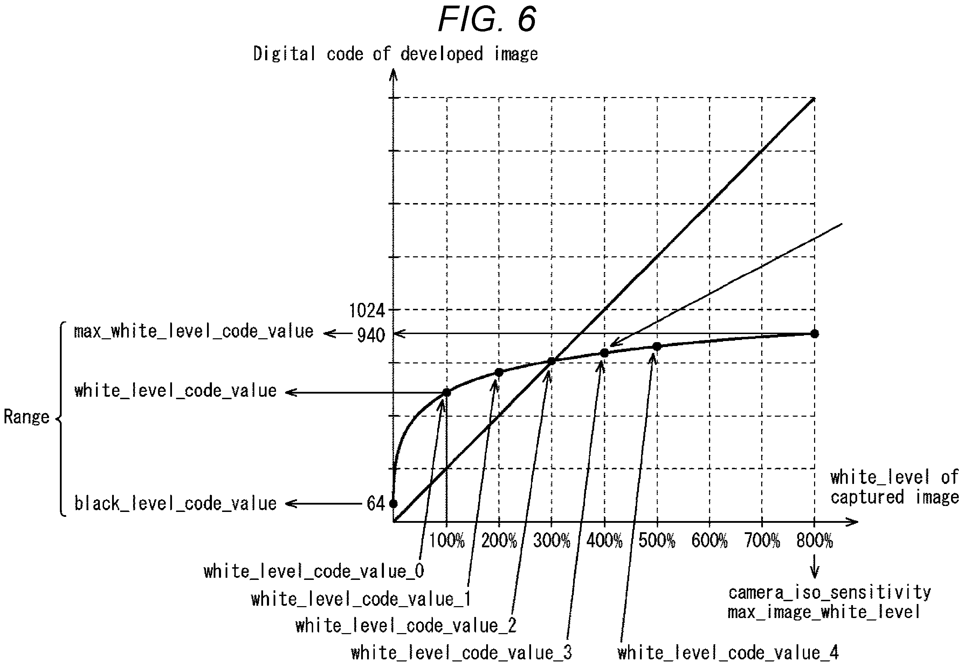

In addition, as illustrated in Fig. 6, in addition to white_level_code_value, it is possible to set and transmit a plurality of white_level_code_value between black_level_code_value and max_white_level_code_value.

Fig. 6 illustrates an example that white_level_code_value_0 through white_level_code_value_4 are set between 0% and 800% as a white level of a captured image and are transmitted.

Further, although an example has been described in the above description where max_white_level_code_value, white_level_code_value and black_level_code_value are set as values, max_white_level_code_value, white_level_code_value and black_level_code_value may be set and transmitted as ranges.

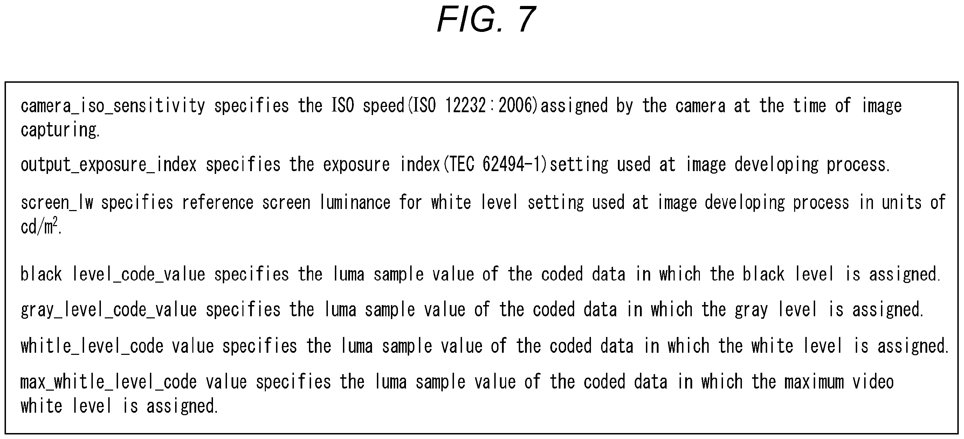

Fig. 7 is a view illustrating an example of characteristics information of a dynamic range.

The characteristics information of the dynamic range includes camera_iso_sensitivity, output_exposure_index, screen_lw, black_level_code_value, gray_level_code_value, white_level_code_value and max_white_level_code_value.

As described above with reference to Fig. 5, camera_iso_sensitivity is indicated by camera sensitivity at the time of capturing of an image. output_exposure_index indicates an exposure index (that is, an exposure index at the time of development) set to be used in process of developing an image. ref_screen_lw indicates reference display luminance of a white level set to be used in process of developing an image.

As described with reference to Fig. 5, black_level_code_value, gray_level_code_value, white_level_code_value and max_white_level_code_value indicate code data of luminance to which a black level, a white level, a gray level and a maximum white level are assigned.

That is, the characteristics information of the dynamic range desirably include maximum luminance (of a captured image) at the time of image capturing, an optimal exposure value at the time of image capturing, an optimal exposure value (of a developed image) at the time of development, a digital value to which a maximum white level after development is assigned, a digital value to which a white level (white 100%) after development is assigned, a digital value to which a gray level after development is assigned, a digital value to which a black level after development is assigned and a digital value between white 100% and maximum white 0% after development.

These pieces of characteristics information of the dynamic range are transmitted to the decoding side according to one of transmitting methods 1 through 4 described below.

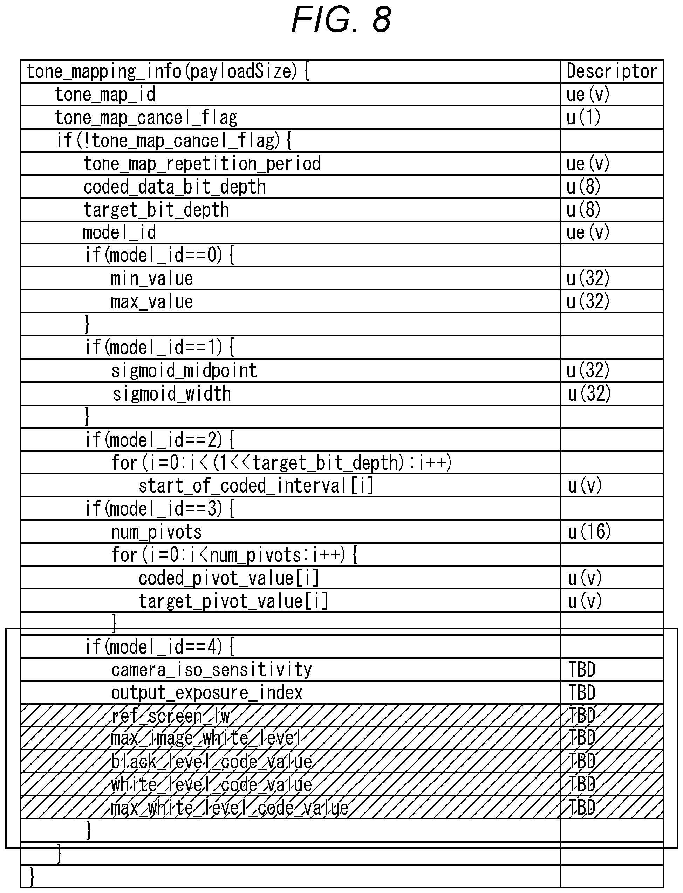

First, an example of transmitting characteristics information of a dynamic range by extending existing SEI (Supplemental enhancement information) will be described as the transmitting method 1 with reference to Fig. 8. Fig. 8 is a view illustrating an example of tone mapping SEI (tone_mapping_information SEI). SEI is auxiliary information used to display an image obtained by performing a decoding operation on an encoded stream.

As indicated in a frame in Fig. 8, the above characteristics information of the dynamic range is set to tone mapping SEI and transmitted by extending model ID (model_id) = 4 in tone mapping SEI.

In addition, in the frame, camera_iso_sensitivity and output_exposure_index which are not hatched are existing information (related art) as setting parameters of the camera. Meanwhile, including these pieces of information in an encoded bit stream and transmitting the encoded bit stream, or using these pieces of information and adjusting a dynamic range are different from related art.

On the other hand, in the frame, ref_screen_lw, max_image_white_level, black_level_code_value, white_level_code_value and max_white_level_code_value which are hatched are newly set by parameters, and are different from related art.

Meanwhile, although different components are used per RGB in the past tone mapping SEI, characteristics information of a dynamic range sets a luminance component of a decoded image as an application target.

Further, TBD is To BE Determined Value, and represents a value set in advance or a parameter set when content is created.

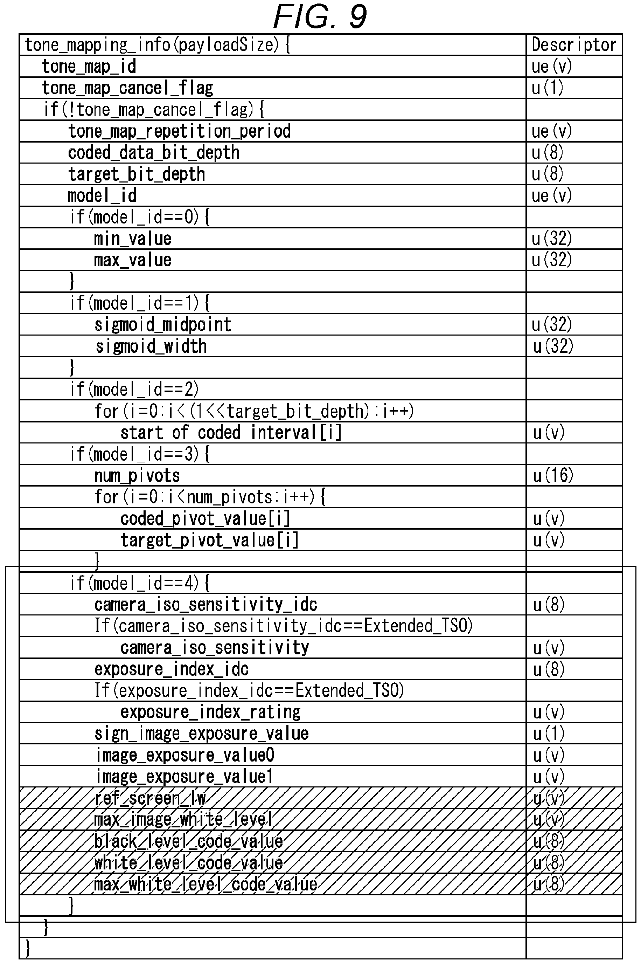

Fig. 9 is a view illustrating another example of tone mapping SEI.

Also in an example in Fig. 9, as indicated in the frame, the above characteristics information of the dynamic range is set to tone mapping SEI and transmitted by extending model ID (model_id) = 4 in tone mapping SEI.

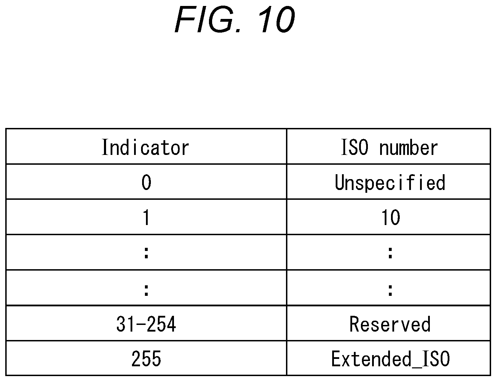

camera_iso_sensitivity_idc indicates a code which indicates sensitivity obtained by the camera. The meaning of this code is indicated in a table in Fig. 10 described below. When camera_iso_sensitivity_idc refers to Extended_ISO, camera_iso_sensitivity in a next row represents ISO_numner. That is, by setting camera_iso_sensitivity_idc as Extended_ISO, it is possible to set camera_iso_sensitivity_idc to a desirable value.

exposure_index_idc indicates a code which indicates an exposure index at the time of image capturing. The meaning of this code is indicated in a table in Fig. 10 described below. When exposure_index _idc refers to Extended_ISO, exposure_index_rating in a next row represents ISO_numner. That is, by setting exposure_index_idc as Extended_ISO, it is possible to set exposure_index_idc to a desirable value.

sign_image_exposure_value indicates a relative code of exposure at the time of development with respect to an exposure value at the time of image capturing. image_expoure_value0 indicates a numerator value of the relative value of exposure at the time of development with respect to the exposure value at the time of image capturing. image_expoure_value1 indicates a dominator value of relative values of exposure at the time of development with respect to the exposure value at the time of image capturing.

That is, by indicating relative values of how much exposure values decrease using sign_image_exposure_value, image_expoure value0 and image_expoure_value1 at the time of development compared to the time of image capturing, it is possible to derive an exposure value (output_exposure_index in Fig. 8) at the time of development. By this means, the exposure value at the time of development can be represented as a decimal number.

ref_screen_lw is content created assuming at what cd/m2 (candela) the content is displayed by white, and indicates that the content needs to be displayed by this white.

max_image_white_level indicates a dynamic range of luminance of an image which is displayed as a percentage of an integer with reference to a reference white level.

Similar to the example in Fig. 8, black_level_code_value, white_level_code_value and max_white_level_code_value indicate code data of luminance to which a black level, a white level and a maximum white level are assigned.

In addition, similar to the example in Fig. 8, also in the example in Fig. 9, in the frame, camera_iso_sensitivity, exposure_index_idc, sign_image_exposure, image_expoure value0 and image_expoure_value1 which are not hatched are existing information (related art) as camera setting parameters. Including these pieces of information in an encoded bit stream and transmitting the encoded bit stream, or using these pieces of information and adjusting a dynamic range are different from related art.

On the other hand, in the frame, ref_screen_lw, max_image_white_level, black_level_code_value, white_level_code_value and max_white_level_code_value which are hatched are newly set by parameters, and are different from related art.

Fig. 10 is a view illustrating a table of meanings of indicators indicated by camera sensitivity and indicators indicated by an exposure index.

When, for example, an indicator is 0, ISO number is not particularly indicated. When the indicator is 1, 10 is indicated as ISO number. When indicators are 2 through 30, ISO numbers are indicated although not illustrated.

When indicators are 31 through 254, ISO numbers are reserved. When the indicator is 255, Extended_ISO is indicated as ISO number. When ISO number is Extended_ISO, both of camera_iso_sensitivity_idc and exposure_index_idc can indicate desired values as described above with reference to Fig. 9.

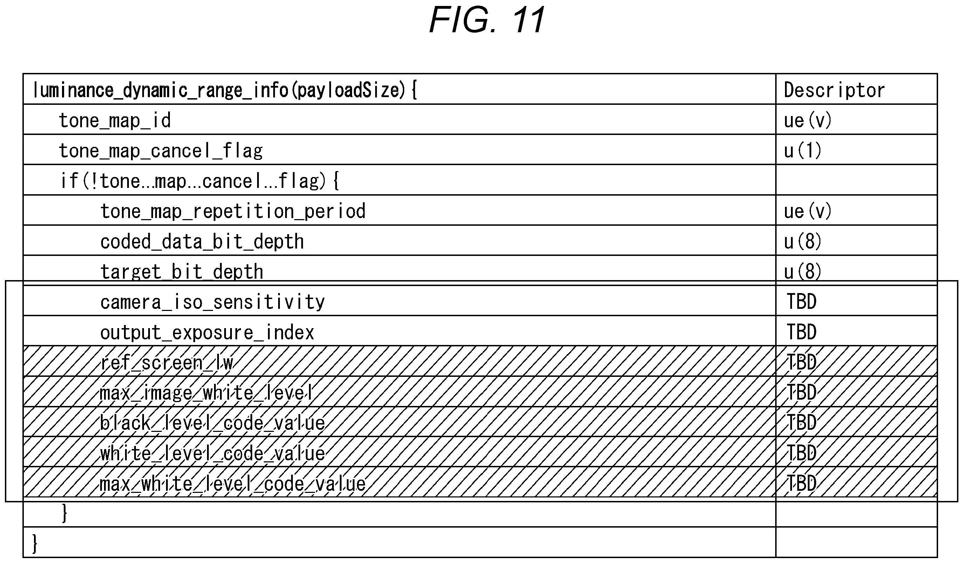

Next, a method of setting new (dedicated) SEI and transmitting characteristics information of a dynamic range will be described as the transmitting method 2 with reference to Fig. 11. Fig. 11 is a view illustrating an example of a luminance dynamic range SEI (luminance_dynamic_range_information SEI).

That is, luminance dynamic range SEI (luminance_dynamic_range_info) is newly set as illustrated in Fig. 11. Further, as illustrated in a frame in Fig. 11, the above characteristics information of the dynamic range is set to this luminance dynamic range SEI and is transmitted. In addition, dynamic range characteristics information in the frame in Fig. 11 is basically the same as the dynamic range characteristics information described above with reference to Fig. 8, and will not be repeatedly described.

Further, the transmitting method 3 is a method of transmitting dynamic range characteristics information by associating the above transmitting methods 1 and 2 and VUI (Video Usability Information) parameters. VUI is information which indicates usability of an image in sequence units.

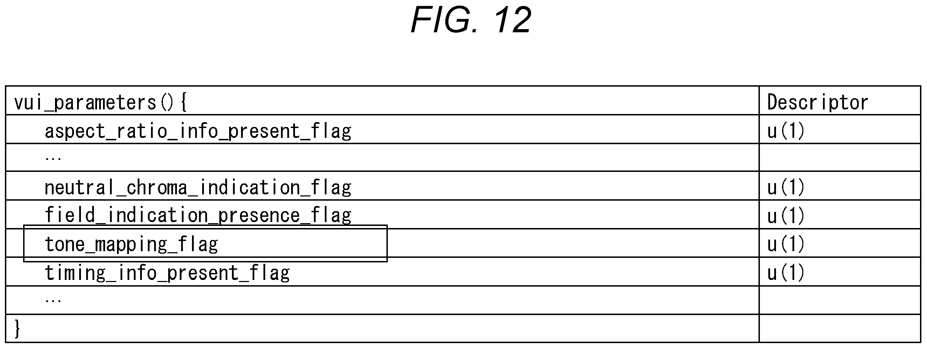

Fig. 12 is a view illustrating an example of a VUI syntax upon association with the transmitting method 1. In an example in Fig. 12, tone_mapping_flag (tone mapping flag) is a flag which indicates presence/absence information indicating whether or not there is tone mapping SEI. 1 indicates the tone mapping flag indicates that there is tone mapping SEI, and 0 indicates that there is not tone mapping SEI.

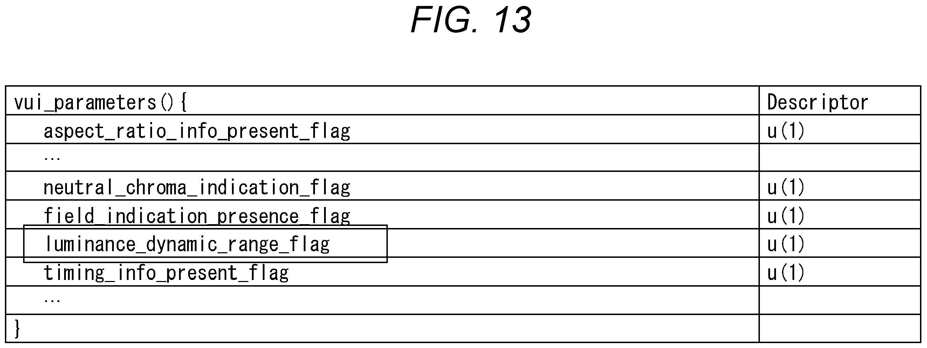

Fig. 13 is a view illustrating an example of a VUI syntax upon association with the transmitting method 2. In the example in Fig. 13, luminance_dynamic_range_flag (luminance dynamic range flag) is a flag which indicates presence/absence information which indicates whether or not there is luminance dynamic range SEI. 1 indicates that luminance dynamic range flag indicates that there is luminance dynamic range SEI, and 0 indicates that there is not luminance dynamic range SEI.

Finally, the transmitting method 4 may transmit dynamic range characteristics information as the above VUI parameter. That is, in this case, instead of the flag illustrated in Fig. 12 or 13 (or in addition to a flag), the dynamic range characteristics information itself is transmitted as the VUI parameter.

Meanwhile, when the dynamic range characteristics information is included in SEI, the dynamic range characteristics information is applicable not only to the HEVC technique but also to the AVC technique. Meanwhile, VUI includes lots of values used on the display side, so that it is possible to combine information when dynamic range characteristics information is included in VUI.

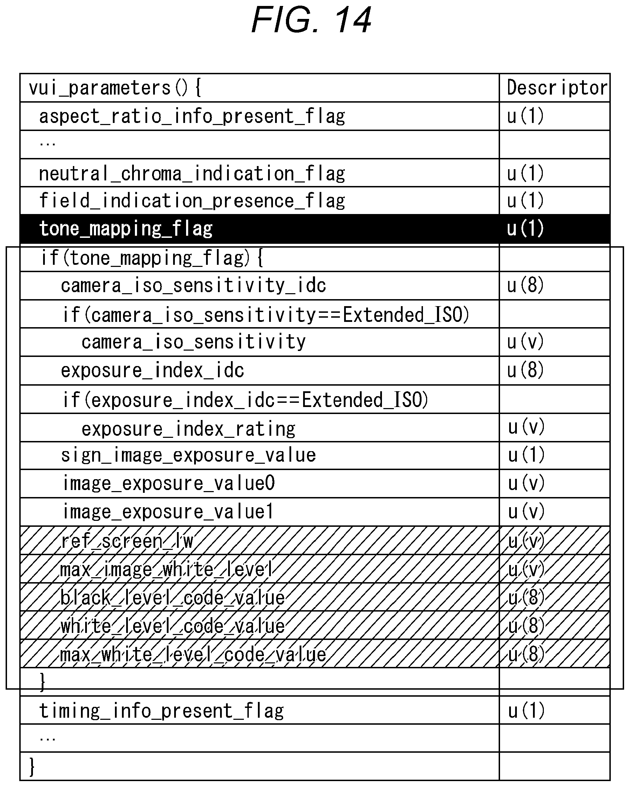

Fig. 14 is a view illustrating an example of a VUI syntax in case of the transmitting method 4.

In the VUI syntax in Fig. 14, at the top of the frame, tone mapping_flag (tone mapping flag) in Fig. 12 is described, and the tone mapping flag is 1 when dynamic range characteristics information is described immediately (the dynamic range characteristics information may not be described immediately as long as it is included in VUI) and is 0 when the dynamic range characteristics information is not described.

Hence, when the tone mapping flag is 1, the decoding side refers to dynamic range characteristics information illustrated in the frame in Fig. 14.

In addition, dynamic range characteristics information illustrated in Fig. 14 is the same as the dynamic range characteristics information described above with reference to Fig. 9, and will not be repeatedly described.

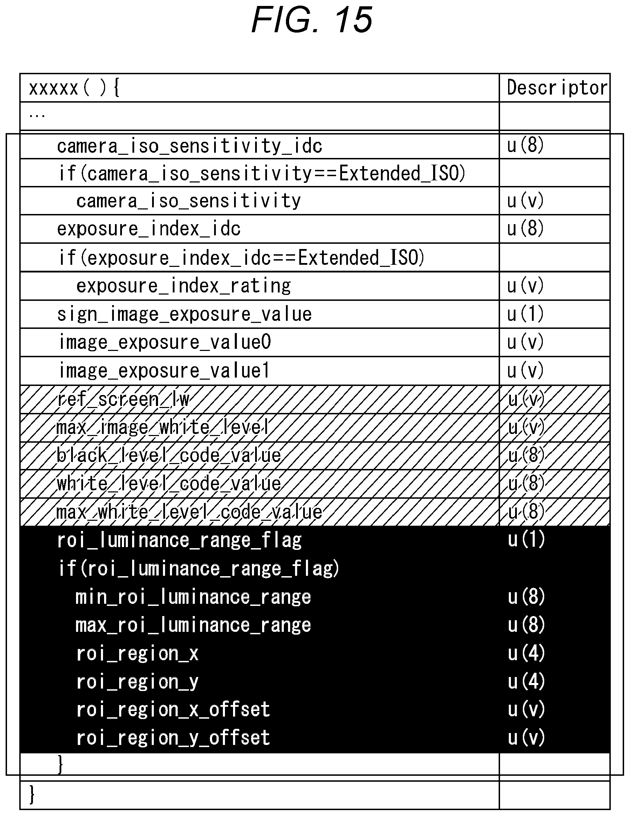

Fig. 15 is a view illustrating an example of dynamic range characteristics information. In addition, dynamic range characteristics information is information described in tone mapping SEI, luminance dynamic range SEI or VUI as described above, and, in the example in Fig. 15, "xxxxx()" is described at a head of a syntax so as not to specify a description position.

That information which represents a range of luminance of a region of interest and/or a position and an offset of the region of interest is added below max_white_level_code_value in the dynamic range characteristics information in Fig. 15 is different from the dynamic range characteristics information in Fig. 9.

That is, roi_luminance_range_flag is a flag which indicates whether or not information which represents a range of luminance of a region of interest and/or the position and the offset of the region of interest are described.

When the value of roi_luminance_range_flag is 1, min_roi_luminance_range, max_roi_luminance_range, roi_region_x, roi_region_y, roi_region_x_offset and roi_region_y_offset are indicated in a portion filled with black.

min_roi_luminance_range indicates a minimum value of a luminance range of a region of interest. max_roi_luminance_range indicates a maximum value of the luminance range of the region of interest. roi_region_x and roi_region_y indicate an upper left x coordinate and y coordinate in the region of interest, respectively.

roi_region_x offset and roi_region_y offset represent values of offset from upper left roi_region_x and roi_region_y. By this means, it is possible to indicate the region of interest from roi_region_x and roi_region_y.

As described above, the luminance range of the region of interest and (or) a position and an offset of the region of interest are included in dynamic range characteristics information, so that it is possible to notify to the decoding side that tone mapping matching the region of interest needs to be performed.

In addition, instead of the luminance range of the region of interest, a black emphasis flag which puts an emphasis on a low luminance range as in, for example, movie content or a white emphasis flag which puts an emphasis on a high luminance range as in television content may be added.

Although the resolution which can be represented by a display is low in the past, and therefore a content creator does not need to include white equal to or more than 100%, displays which can reproduce higher resolutions are recently coming out.

Hence, as described above, white equal to or more than 100% is provided to a video image which has only 100% white, and, display capability varies and information which converts the video image into a video image matching a display is provided in this display.

By this means, the display side can accurately reproduce the dynamic range.

[Description of an Operation of the Encoding Device]

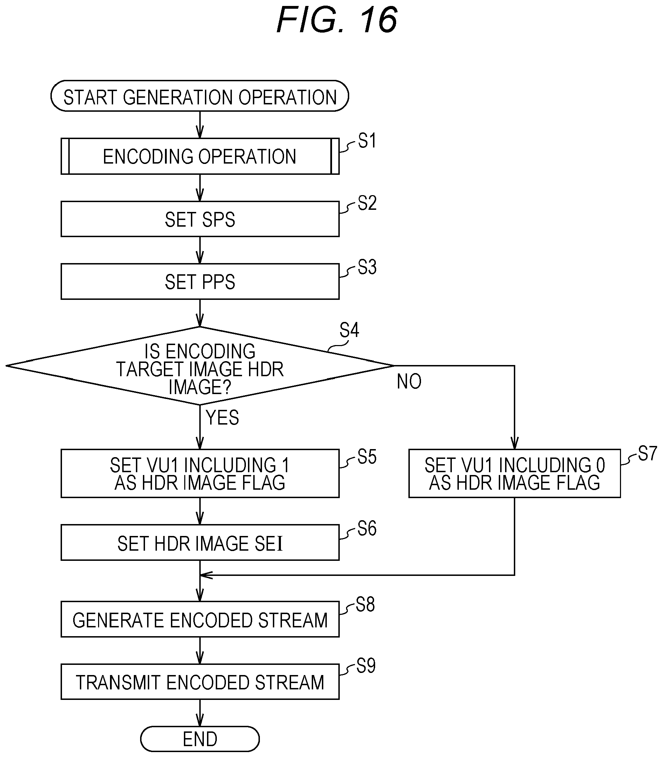

Fig. 16 is a flowchart for explaining a generating operation of the encoding device 1 in Fig. 3. In addition, in the example in Fig. 16, the above example of the transmitting method 3 will be described.

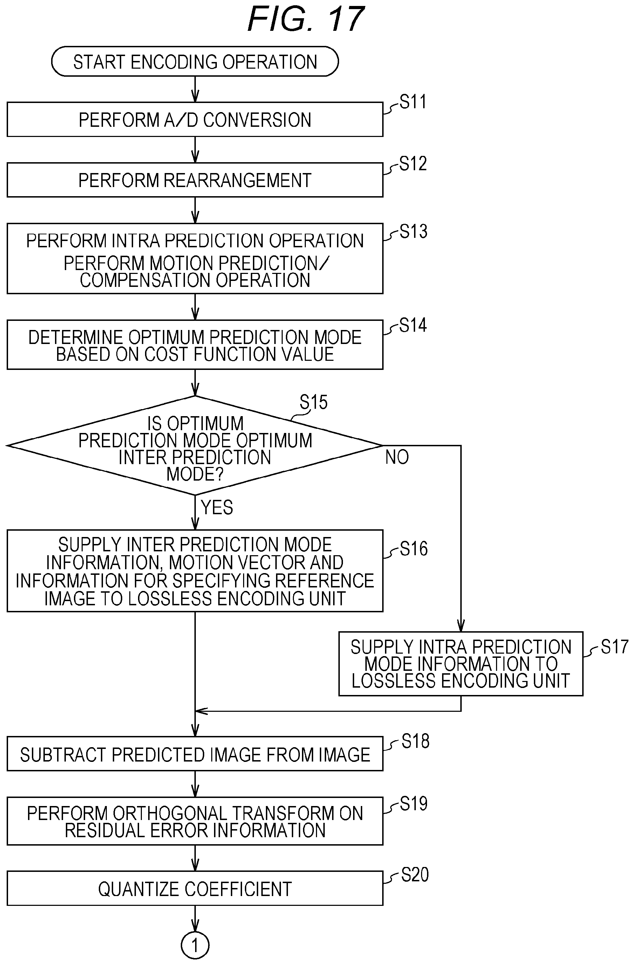

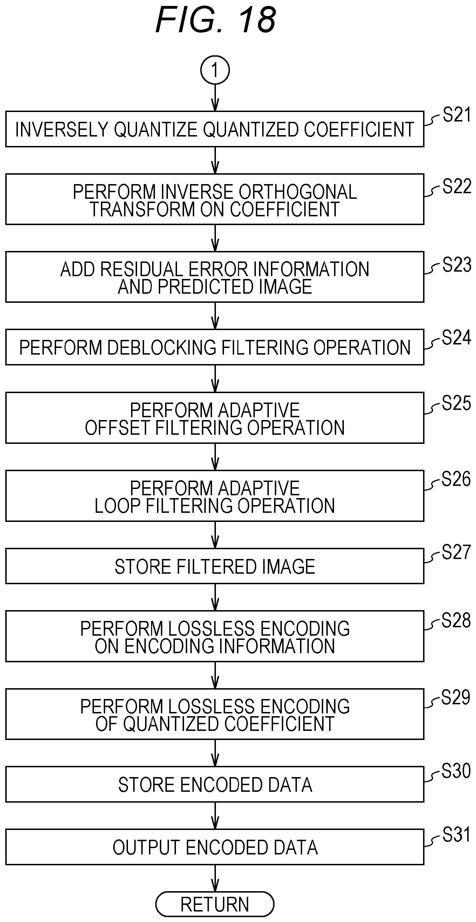

In step S1 in Fig. 16, the encoding unit 2 of the encoding device 1 performs an encoding operation of encoding an image such as a frame-based captured image input as an input signal from an outside according to the HEVC technique. This encoding operation will be described later in detail with reference to Figs. 17 and 18.

In step S2, the setting unit 3 sets SPS. In step S3, the setting unit 3 sets PPS. In step S4, the setting unit 3 decides whether or not an encoding target image is a HDR (High Dynamic Range) image, based on, for example, a user's operation of an input unit which is not illustrated. In addition, an image which includes the above characteristics information of the dynamic range will be referred to a "HDR image" below.

When it is determined in step S4 that the encoding target image is a HDR image, the setting unit 3 sets VUI including 1 as a HDR image flag in step S5. In step S6, the setting unit 3 sets SEI such as HDR image SEI, and moves the operation on to step S8.

Meanwhile, the HDR image flag is tone mapping_flag described above with reference to Fig. 12 or luminance_dynamic_range_flag described above with reference to Fig. 13. Further, HDR image SEI is tone mapping SEI described above with reference to Fig. 8 or luminance dynamic range SEI described above with reference to Fig. 11.

Meanwhile, when it is determined in step S4 that the encoding target image is not a HDR image, the setting unit 3 sets VUI including 0 as a HDR image flag in step S7. Further, if necessary, the setting unit 3 sets SEI other than HDR image SEI, and moves the operation on to step S8.

In step S8, the setting unit 3 generates an encoded stream from the set SPS, PPS, VUI and SEI and the encoded data supplied from the encoding unit 2. The setting unit 3 supplies the encoded stream to the transmitting unit 4.

In step S9, the transmitting unit 4 transmits the encoded stream supplied from the setting unit 3, to a decoding device described below, and finishes the operation.

Figs. 17 and 18 are flowcharts for explaining details of the encoding operation in step S1 in Fig. 16.

In step S11 of Fig. 17, the A/D converter 11 of the encoding unit 2 performs an A/D conversion on a frame-based image input as an input signal, and outputs and stores the image into the screen rearrangement buffer 12.

In step S12, the screen rearrangement buffer 12 rearranges the frames of the image stored in displaying order, so that the frames of the image are arranged in encoding order in accordance with the GOP (Group of Pictures) structure.

The screen rearrangement buffer 12 supplies the rearranged frame-based image to the arithmetic operation unit 13, the intra prediction unit 24, and the motion prediction/compensation unit 25. It should be noted that the operations of steps S13 through S31 described below are carried out in CU (Coding Unit) units for example.

In step S13, the intra prediction unit 24 performs an intra prediction operation in all candidate intra prediction modes. Further, the intra prediction unit 24 calculates cost function values of all candidate intra prediction modes based on the image read from the screen rearrangement buffer 12 and a predicted image generated as a result of the intra prediction operation. Furthermore, the intra prediction unit 24 then determines the intra prediction mode with the smallest cost function value to be the optimum intra prediction mode. The intra prediction unit 24 supplies the predicted image generated in the optimum intra prediction mode and the corresponding cost function value to the predicted image selection unit 26.

Further, the motion prediction/compensation unit 25 performs the motion prediction/compensation operation in all candidate inter prediction modes. Furthermore, the motion prediction/compensation unit 25 calculates cost function values for all candidate inter prediction modes based on the image and the predicted image supplied from the screen rearrangement buffer 12, and determines the inter prediction mode of the smallest cost function value as the optimum inter prediction mode. Still further, the motion prediction/compensation unit 25 supplies the cost function value of the optimum inter prediction mode and the corresponding predicted image to the predicted image selection unit 26.

In step S14, the predicted image selection unit 26 determines a prediction mode of a smaller cost function value of the optimum intra prediction mode and the optimum inter prediction mode as the optimum prediction mode based on the cost function values supplied from the intra prediction unit 24 and the motion prediction/compensation unit 25 according to the operation in step S13. Further, the predicted image selection unit 26 then supplies the predicted image in the optimum prediction mode to the arithmetic operation unit 13 and the addition unit 20.

In step S15, the predicted image selection unit 26 determines whether the optimum prediction mode is the optimum inter prediction mode. When it is determined in step S15 that the optimum prediction mode is the optimum inter prediction mode, the predicted image selection unit 26 notifies the motion prediction/compensation unit 25 of selection of the predicted image generated in the optimum inter prediction mode.

Further, in step S16, the motion prediction/compensation unit 25 supplies the inter prediction mode information, the corresponding motion vector and information for specifying the reference image, to the lossless encoding unit 16. Furthermore, the operation then moves on to step S18.

Meanwhile, when it is determined in step S15 that the optimum prediction mode is not the optimum inter prediction mode, that is, when the optimum prediction mode is the optimum intra prediction mode, the predicted image selection unit 26 notifies the intra prediction unit 24 of selection of the predicted image generated in the optimum intra prediction mode.

Further, in step S17, the intra prediction unit 24 supplies the intra prediction mode information to the lossless encoding unit 16. Furthermore, the operation then moves on to step S18.

In step S18, the arithmetic operation unit 13 performs encoding by subtracting a predicted image supplied from the predicted image selection unit 26 from an image supplied from the screen rearrangement buffer 12. The arithmetic operation unit 13 outputs the resultant image, as residual error information to the orthogonal transform unit 14.

In step S19, the orthogonal transform unit 14 performs an orthogonal transform on the residual error information supplied from the arithmetic operation unit 13, and supplies the resultant coefficient to the quantization unit 15.

In step S20, the quantization unit 15 quantizes the coefficient supplied from the orthogonal transform unit 14. The quantized coefficient is input to the lossless encoding unit 16 and the inverse quantization unit 18.

In step S21, the inverse quantization unit 18 inversely quantizes the quantized coefficient supplied from the quantization unit 15.

In step S22, the inverse orthogonal transform unit 19 performs an inverse orthogonal transform on the coefficient supplied from the inverse quantization unit 18, and supplies the resultant residual error information to the addition unit 20.

In step S23, the addition unit 20 adds the residual error information supplied from the inverse orthogonal transform unit 19 to the predicted image supplied from the predicted image selection unit 26, and obtains a locally decoded image. The addition unit 20 supplies the resultant image to the deblocking filter 21, and to the frame memory 22.

In step S24, the deblocking filter 21 performs a deblocking filtering operation on the locally decoded image supplied from the addition unit 20. The deblocking filter 21 supplies the resultant image to the adaptive offset filter 41.

In step S25, the adaptive offset filter 41 performs an adaptive offset filtering operation on the image supplied from the deblocking filter 21 per LCU. The adaptive offset filter 41 supplies the resultant image to the adaptive loop filter 42. Further, the adaptive offset filter 41 supplies per LCU to the lossless encoding unit 16 the storage flag, the index or the offset and type information.

In step S26, the adaptive loop filter 42 performs an adaptive loop filtering operation on the image supplied from the adaptive offset filter 41 per LCU. The adaptive loop filter 42 supplies the resultant image to the frame memory 22. Further, the adaptive loop filter 42 supplies the filter coefficient used in the adaptive loop filtering operation, to the lossless encoding unit 16.

In step S27, the frame memory 22 stores images before and after filtering. More specifically, the frame memory 22 stores images supplied from the addition unit 20 and images supplied from the adaptive loop filter 42. The image stored in the frame memory 22 is then output as a reference image to the intra prediction unit 24 or the motion prediction/compensation unit 25 through the switch 23.

In step S28, the lossless encoding unit 16 performs lossless encoding on intra prediction mode information or inter prediction mode information, a motion vector, information for specifying a reference image, offset filter information and a filter coefficient as encoding information.

In step S29, the lossless encoding unit 16 performs lossless encoding on the quantized coefficient supplied from the quantization unit 15. Further, the lossless encoding unit 16 generates encoded data from the encoding information subjected to lossless encoding and the coefficient subjected to the lossless encoding in the operation in step S28.

In step S30, the lossless encoding unit 16 supplies and stores encoded data into the accumulation buffer 17.

In step S31, the accumulation buffer 17 outputs the stored encoded data to the setting unit 3 in Fig. 3. Further, the operation returns to step S1 in Fig. 16, and then moves on to step S2.

In addition, although the intra prediction operation and the motion prediction/compensation operation are performed at all times in the encoding operation in Figs. 17 and 18 for ease of description, only one of the intra prediction operation and the motion prediction/compensation operation is actually performed depending on, for example, a picture type.

As described above, the encoding device 1 sets HDR image SEI (tone mapping SEI or luminance dynamic range SEI) and a HDR image flag (tone_mapping_flag or luminance_dynamic_range_flag), and transmits an HDR image together with the encoded data.

Consequently, the decoding device which decodes and displays an encoded stream of the HDR image can reliably reproduce and display the dynamic range of the HDR image preferentially using HDR image SEI when the HDR image flag is 1. Consequently, when decoding and displaying an encoded stream of a HDR image, the encoding device 1 can generate the encoded stream of the HDR image such that the dynamic range of the HDR image can be reliably reproduced and displayed.

[Example Structure of a First Embodiment of a Decoding Device]

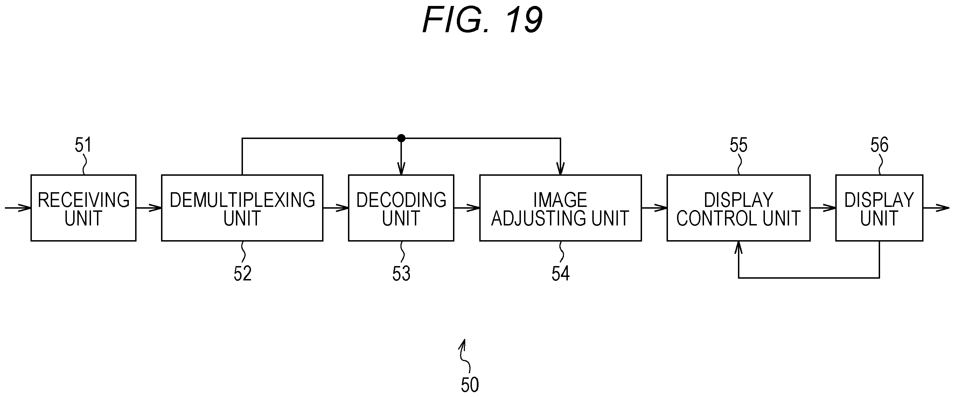

Fig. 19 is a block diagram illustrating an example structure of a first embodiment of a decoding device as an image processing device to which the present technique is applied and which decodes an encoded stream transmitted from the encoding device 1 in Fig. 3.

A decoding device 50 in Fig. 19 has a receiving unit 51, a demultiplexing unit 52, a decoding unit 53, an image adjusting unit 54, a display control unit 55 and a display unit 56.

The receiving unit 51 of the decoding device 50 receives the encoded stream transmitted from the encoding device 1 in Fig. 3, and supplies the encoded stream to the demultiplexing unit 52. The demultiplexing unit 52 demultiplexes, for example, SPS, PPS, VUI, SEI and encoded data from the encoded stream supplied from the receiving unit 51. The demultiplexing unit 52 supplies the encoded data to the decoding unit 53. Further, the demultiplexing unit 52 supplies SPS, PPS, VUI and SEI, too, to the decoding unit 53 and the image adjusting unit 54 if necessary.

The decoding unit 53 refers to, for example, SPS, PPS, VUI and SEI supplied from the demultiplexing unit 52 if necessary, and decodes the encoded data supplied from the demultiplexing unit 52 according to the HEVC technique. The decoding unit 53 supplies the image such as a HDR image obtained as a result of decoding to the image adjusting unit 54 as an output signal.

The image adjusting unit 54 adjusts a dynamic range of the HDR image supplied as the output signal from the decoding unit 53 based on, for example, SPS, PPS, VUI and SEI supplied from the demultiplexing unit 52 if necessary. For example, the image adjusting unit 54 adjusts the dynamic range of the image according to the display dynamic range. Further, the image adjusting unit 54 supplies the HDR image as the output signal to the display control unit 55.

The display control unit 55 generates a display image based on the HDR image supplied from the image adjusting unit 54 (a display method notified from the display unit 56 if necessary). The display control unit 55 displays the generated display image by supplying the display image to the display unit 56.

The display unit 56 displays the display image supplied from the display control unit 55. Further, the display unit 56 notifies a display method set in advance or a display method set in advance and specified by the user, to the display control unit 55.

[Example Structure of a Decoding Unit]

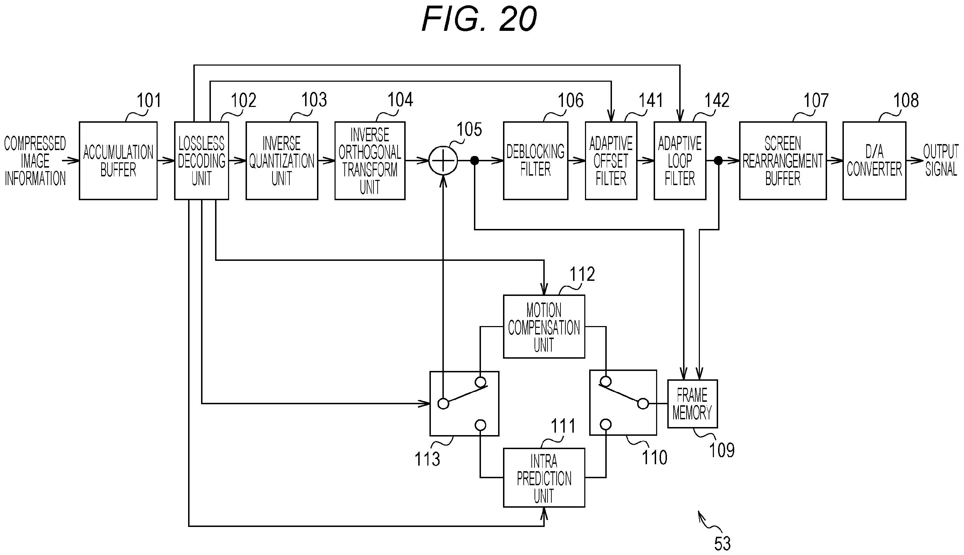

Fig. 20 is a block diagram illustrating an example structure of the decoding unit 53 in Fig. 19.

The decoding unit 53 in Fig. 20 includes an accumulation buffer 101, a lossless decoding unit 102, an inverse quantization unit 103, an inverse orthogonal transform unit 104, an addition unit 105, a deblocking filter 106, a screen rearrangement buffer 107, a D/A converter 108, a frame memory 109, a switch 110, an intra prediction unit 111, a motion compensation unit 112, and a switch 113.

Further, between the deblocking filter 106, the screen rearrangement buffer 107 and the frame memory 109, an adaptive offset filter 141 and an adaptive loop filter 142 are provided.

The accumulation buffer 101 of the decoding unit 53 receives and stores the encoded data from the demultiplexing unit 52 in Fig. 19. The accumulation buffer 101 supplies the stored encoded data to the lossless decoding unit 102.

The lossless decoding unit 102 obtains a quantized coefficient and encoding information by performing lossless decoding such as variable-length decoding or arithmetic decoding on the encoded data from the accumulation buffer 101. The lossless decoding unit 102 supplies the quantized coefficient to the inverse quantization unit 103. Further, the lossless decoding unit 102 supplies intra prediction mode information as the encoding information to the intra prediction unit 111, and supplies the motion vector, information for specifying a reference image and inter prediction mode information to the motion compensation unit 112. Furthermore, the lossless decoding unit 102 supplies the intra prediction mode information or the inter prediction mode information as the encoding information to the switch 113.

The lossless decoding unit 102 supplies the offset filter information as the encoding information to the adaptive offset filter 141, and supplies the filter coefficient to the adaptive loop filter 142.

The inverse quantization unit 103, the inverse orthogonal transform unit 104, the addition unit 105, the deblocking filter 106, the frame memory 109, the switch 110, the intra prediction unit 111 and the motion compensation unit 112 perform the same operations as the inverse quantization unit 18, the inverse orthogonal transform unit 19, the addition unit 20, the deblocking filter 21, the frame memory 22, the switch 23, the intra prediction unit 24, and the motion prediction/compensation unit 25 in Fig. 4, so as to decode images.

Specifically, the inverse quantization unit 103 inversely quantizes the quantized coefficient from the lossless decoding unit 102, and supplies the resultant coefficient to the inverse orthogonal transform unit 104.

The inverse orthogonal transform unit 104 performs an inverse orthogonal transform on the coefficient from the inverse quantization unit 103, and supplies the resultant residual error information to the addition unit 105.

The addition unit 105 adds the residual error information as a decoding target image supplied from the inverse orthogonal transform unit 104 to the predicted image supplied from the switch 113 to decode. The addition unit 105 supplies the image obtained as a result of decoding to the deblocking filter 106, and also supplies the image to the frame memory 109. In addition, where there are no predicted images supplied from the switch 113, the addition unit 105 supplies an image which is the residual error information supplied from the inverse orthogonal transform unit 104 as the image obtained as a result of decoding, to the deblocking filter 106, and also supplies and stores the image into the frame memory 109.

The deblocking filter 106 performs filtering on the image supplied from the addition unit 105, to remove block distortions. The deblocking filter 106 supplies the resultant image to the adaptive offset filter 141.

The adaptive offset filter 141 has a buffer which sequentially stores offsets supplied from the lossless decoding unit 102. Further, the adaptive offset filter 141 performs per LCU an adaptive offset filtering operation on the image subjected to the adaptive deblocking filtering operation performed by the deblocking filter 106, based on the offset filter information supplied from the lossless decoding unit 102.

More specifically, if the storage flag included in offset filter information is 0, the adaptive offset filter 141 performs an adaptive offset filtering operation of a type indicated by type information on an image subjected to the deblocking filtering operation in LCU units by using the offset included in this offset filter information.

Meanwhile, if the storage flag is 1 included in offset filter information, the adaptive offset filter 141 reads from the image subjected to the deblocking filtering operation in LCU units an offset stored at a position indicated by an index included in this offset filter information. Further, the adaptive offset filter 141 performs the adaptive offset filtering operation of the type indicated by type information using the read offset. The adaptive offset filter 141 supplies the image subjected to the adaptive offset filtering operation, to the adaptive loop filter 142.

The adaptive loop filter 142 performs an adaptive loop filtering operation on the image supplied from the adaptive offset filter 141 per LCU using a filter coefficient supplied from the lossless decoding unit 102. The adaptive loop filter 142 supplies the resultant image to the frame memory 109 and the screen rearrangement buffer 107.

The image stored in the frame memory 109 is read as a reference image through the switch 110, and is supplied to the motion compensation unit 112 or the intra prediction unit 111.

The screen rearrangement buffer 107 stores the image supplied from the deblocking filter 106 by the frame. The screen rearrangement buffer 107 rearranges the frames of the stored image in the original displaying order, instead of in the encoding order, and supplies the rearranged image to the D/A converter 108.

The D/A converter 108 performs a D/A conversion on the frame-based image supplied from the screen rearrangement buffer 107, and outputs the image as an output signal to the image adjusting unit 54 in Fig. 19.

The intra prediction unit 111 performs in tile and slice units an intra prediction operation in the intra prediction mode indicated by intra prediction mode information supplied from the lossless decoding unit 102 using a reference image which is read from the frame memory 109 through the switch 110 and is not filtered by the deblocking filter 106.

The intra prediction unit 111 supplies the resultant predicted image to the switch 113.

The motion compensation unit 112 reads the reference image which is filtered by the deblocking filter 106, from the frame memory 109 through the switch 110 in the tile and slice units based on information for specifying the reference image supplied from the lossless decoding unit 102. The motion compensation unit 112 performs a motion compensating operation in the optimum inter prediction mode indicated by inter prediction mode information using the motion vector and the reference image. The motion compensation unit 112 supplies the resultant predicted image to the switch 113.

When the intra prediction mode information is supplied from the lossless decoding unit 102, the switch 113 supplies the predicted image supplied from the intra prediction unit 111 to the addition unit 105. Meanwhile, when the inter prediction mode information is supplied from the lossless decoding unit 102, the switch 113 supplies the predicted image supplied from the motion compensation unit 112 to the addition unit 105.

[Description of an Operation of the Decoding Device]

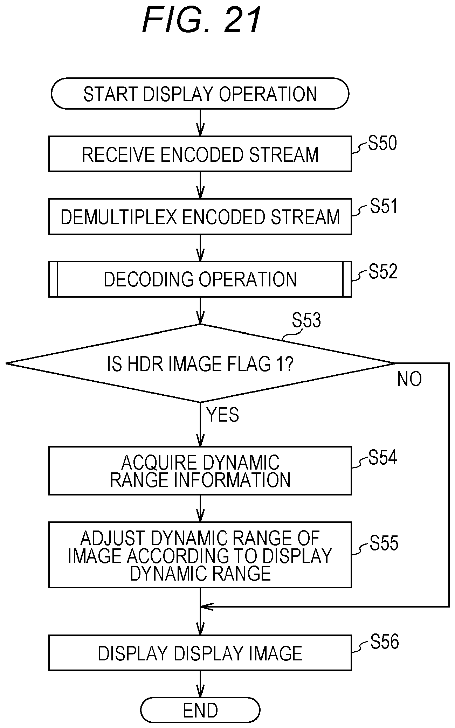

Fig. 21 is a flowchart for explaining a display operation of the decoding device 50 in Fig. 19.

In step S50 in Fig. 21, the receiving unit 51 of the decoding device 50 receives the encoded stream transmitted from the encoding device 1 in Fig. 3, and supplies the encoded stream to the demultiplexing unit 52.

In step S51, the demultiplexing unit 52 demultiplexes, for example, SPS, PPS, VUI, SEI and encoded data from the encoded stream supplied from the receiving unit 51. The demultiplexing unit 52 supplies the encoded data to the decoding unit 53. Further, the demultiplexing unit 52 supplies SPS, PPS, VUI and SEI, too, to the decoding unit 53 and the image adjusting unit 54 if necessary.

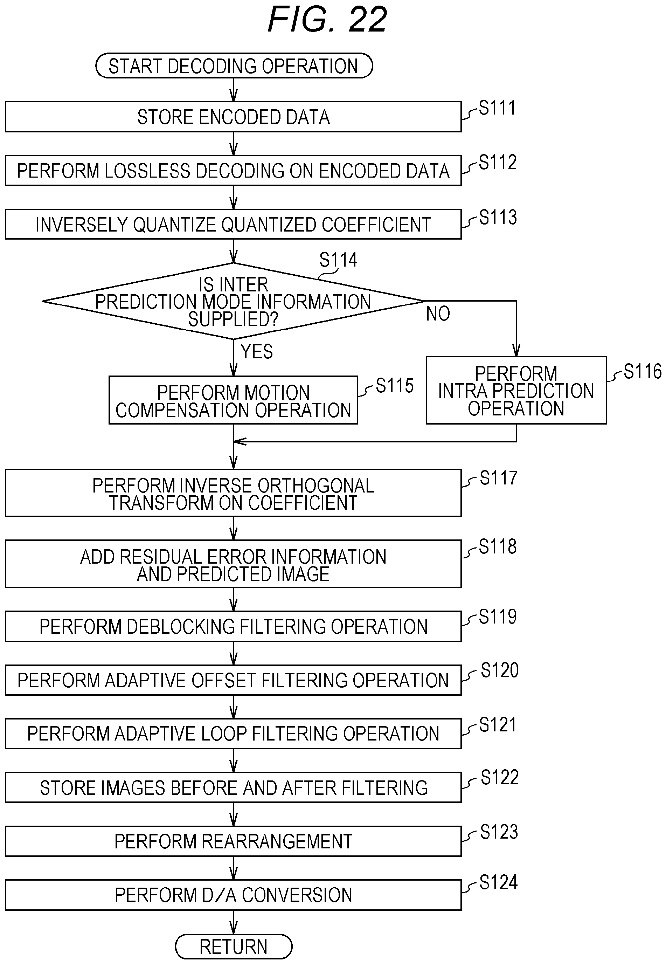

In step S52, the decoding unit 53 performs a decoding operation of referring to, for example, SPS, PPS, VUI and SEI supplied from the demultiplexing unit 52 if necessary, and decoding the encoded data supplied from the demultiplexing unit 52 according to the HEVC technique. This decoding operation will be described later in detail with reference to Fig. 22.

In step S53, the image adjusting unit 54 determines whether or the HDR image flag included in VUI supplied from the demultiplexing unit 52 is 1. As described above with reference to Fig. 16, the HDR image flag is tone mapping_flag illustrated in Fig. 12 or luminance_dynamic_range_flag illustrated in Fig. 13. When the HDR image flag is determined to be 1 in step S53, the image adjusting unit 54 determines that the output signal supplied from the decoding unit 53 is the HDR image.

Further, in step S54, the image adjusting unit 54 obtains dynamic range characteristics information included in HDR image SEI supplied from the demultiplexing unit 52. More specifically, as described above with reference to Fig. 16, dynamic range characteristics information is obtained from tone mapping SEI illustrated in Fig. 8 or luminance dynamic range SEI illustrated in Fig. 11.

In step S55, the image adjusting unit 54 adjusts the dynamic range of the image to the display dynamic range based on the dynamic range characteristics information obtained in step S54. The adjusting operation of this dynamic range includes, for example, a tone mapping operation. The image adjusting unit 54 supplies the adjusted image to the display control unit 55.

In addition, although there are roughly two methods of adjusting images in step S55, both operations are operations of adjusting the image to display capability of the method.

According to a first method, when an image of a higher dynamic range than the display capability of the method is input, an operation of decreasing the dynamic range of the image according to the display capability of the method is performed.

According to a second method, when an image of a lower dynamic range than the display capability of the method is input, an operation of increasing the dynamic range of the image according to the display capability of the method is performed.

Meanwhile, when it is determined in step S53 that the HDR image flag is not 1, steps S54 and S55 are skipped and the operation moves on to step S56. That is, in this case, the image adjusting unit 54 supplies the image from the decoding unit 53 as is to the display control unit 55.

In step S56, the display control unit 55 generates a display image based on the HDR image supplied from the image adjusting unit 54 and supplies the generated display image to the display unit 56 to display the display image on the display unit 56, and finishes the operation.

Fig. 22 is a flowchart for explaining details of the decoding operation in step S52 in Fig. 21.

In step S111 in Fig. 22, the accumulation buffer 101 of the decoding unit 53 receives and stores the frame-based encoded data from the demultiplexing unit 52 in Fig. 19. The accumulation buffer 101 supplies the stored encoded data to the lossless decoding unit 102. It should be noted that the operations of steps S112 through S124 described below are carried out in CU units for example.

In step S112, the lossless decoding unit 102 obtains a quantized coefficient and encoding information by performing lossless decoding on the encoded data from the accumulation buffer 101. The lossless decoding unit 102 supplies the quantized coefficient to the inverse quantization unit 103. Further, the lossless decoding unit 102 supplies intra prediction mode information as the encoding information to the intra prediction unit 111, and supplies the motion vector, inter prediction mode information and information for specifying a reference image to the motion compensation unit 112. Furthermore, the lossless decoding unit 102 supplies the intra prediction mode information or the inter prediction mode information as the encoding information to the switch 113.

Still further, the lossless decoding unit 102 supplies the offset filter information as the encoding information to the adaptive offset filter 141, and supplies the filter coefficient to the adaptive loop filter 142.

In step S113, the inverse quantization unit 103 inversely quantizes the quantized coefficient from the lossless decoding unit 102, and supplies the resultant coefficient to the inverse orthogonal transform unit 104.

In step S114, the motion compensation unit 112 determines whether or not inter prediction mode information is supplied from the lossless decoding unit 102. When it is determined in step S114 that the inter prediction mode information is supplied, the operation moves on to step S115.

In step S115, the motion compensation unit 112 reads the reference image filtered by the deblocking filter 106 and performs the motion compensating operation based on the motion vector, the inter prediction mode information and the information for specifying the reference image supplied from the lossless decoding unit 102. The motion compensation unit 112 supplies a resultant predicted image to the addition unit 105 through the switch 113, and moves the operation on to step S117.

Meanwhile, when it is determined in step S114 that the inter prediction mode is not supplied, that is, when the intra prediction mode information is supplied to the intra prediction unit 111, the operation moves on to step S116.

In step S116, the intra prediction unit 111 performs an intra prediction operation in the intra prediction mode indicated by intra prediction mode information using the reference image which is read from the frame memory 109 through the switch 110 and is not filtered by the deblocking filter 106. The intra prediction unit 111 supplies a predicted image generated as a result of the intra prediction operation to the addition unit 105 through the switch 113, and moves the operation on to step S117.

In step S117, the inverse orthogonal transform unit 104 performs an inverse orthogonal transform on the coefficient from the inverse quantization unit 103, and supplies the resultant residual error information to the addition unit 105.

In step S118, the addition unit 105 adds the residual error information supplied from the inverse orthogonal transform unit 104 to the predicted image supplied from the switch 113. The addition unit 105 supplies the resultant image to the deblocking filter 106, and also supplies the image to the frame memory 109.

In step S119, the deblocking filter 106 performs filtering on the image supplied from the addition unit 105, to remove block distortions. The deblocking filter 106 supplies the resultant image to the adaptive offset filter 141.

In step S120, the adaptive offset filter 141 performs per LCU an adaptive offset filtering operation on the image subjected to the deblocking filtering operation performed by the deblocking filter 106, based on the offset filter information supplied from the lossless decoding unit 102. The adaptive offset filter 141 supplies the image subjected to the adaptive offset filtering operation, to the adaptive loop filter 142.

In step S121, the adaptive loop filter 142 performs an adaptive loop filtering operation on the image supplied from the adaptive offset filter 141 per LCU using a filter coefficient supplied from the lossless decoding unit 102. The adaptive loop filter 142 supplies the resultant image to the frame memory 109 and the screen rearrangement buffer 107.

In step S122, the frame memory 109 stores the image which is not filtered yet and supplied from the addition unit 105, and the filtered image supplied from the deblocking filter 106. The image stored in the frame memory 109 is supplied as a reference image to the motion compensation unit 112 or the intra prediction unit 111 through the switch 110.

In step S123, the screen rearrangement buffer 107 stores the image supplied from the deblocking filter 106 by the frame, rearranges the frames of the stored image in the original displaying order, instead of in the encoding order, and supplies the rearranged image to the D/A converter 108.

In step S124, the D/A converter 108 performs a D/A conversion on the frame-based image supplied from the screen rearrangement buffer 107, and outputs the image as an output signal to the image adjusting unit 54 in Fig. 19. Further, the operation returns to step S52 in Fig. 21, and then moves on to step S53.

As described above, the decoding device 50 can decode encoded data and generate an image, and reliably reproduce and display the dynamic range of the HDR image preferentially using HDR image SEI when the HDR image flag is 1.

In addition, the HDR image flag may be included in another NAL unit such as SPS instead of VUI.

Although the HEVC technique is basically used for the encoding technique above, this technique is a technique for displaying images and is not limited to the encoding technique. Consequently, this technique is not limited to the HEVC technique, and can adopt other encoding techniques/decoding techniques. For example, the AVC technique described below is also applicable to a device which performs an encoding/decoding operation.

<Second Embodiment>

[Example Structure of a Second Embodiment of an Encoding Device]

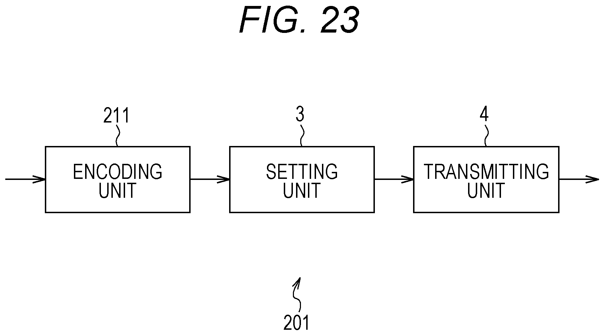

Fig. 23 is a block diagram illustrating an example structure according to a second embodiment of an encoding device as an image processing device to which the present technique is applied.

In the structure illustrated in Fig. 23, the same components as those in Fig. 3 are denoted by the same reference numerals as those in Fig. 3. The explanations that have already been made will not be repeated.

The structure of an encoding device 201 in Fig. 23 differs from the structure in Fig. 3 in including an encoding unit 211 instead of an encoding unit 2. The structure of the encoding device 201 is common to the structure in Fig. 3 in including a setting unit 3 and a transmitting unit 4.

The encoding unit 211 of the encoding device 201 receives as an input signal an input of an image such as a frame-based captured image. The encoding unit 211 encodes the input signal according to the AVC technique, and supplies the resultant encoded data to the setting unit 3.

The setting unit 3 sets characteristics information of a dynamic range of an image in a format matching the standard of the AVC technique. The setting unit 3 generates an encoded stream from the set characteristics information and the encoded data supplied from the encoding unit 211. The setting unit 3 supplies the encoded stream to the transmitting unit 4.

That is, the encoding device 201 differs from the encoding device 1 in Fig. 3 in performing an encoding operation according to the AVC technique.

[Example Structure of an Encoding Unit]

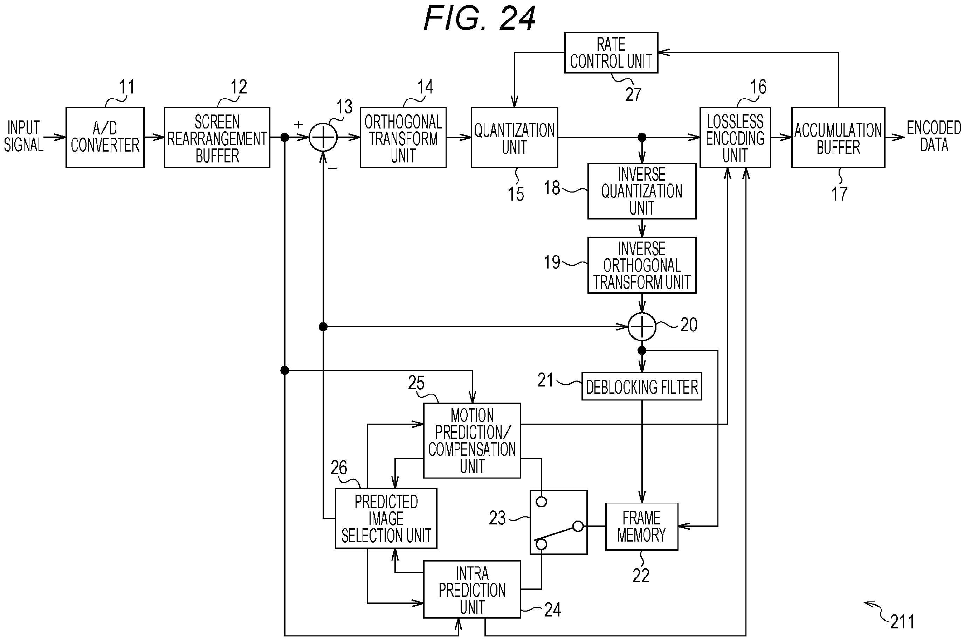

Fig. 24 is a block diagram illustrating an example structure of the encoding unit 211 in Fig. 23.

In the structure illustrated in Fig. 24, the same components as those in Fig. 4 are denoted by the same reference numerals as those in Fig. 4. The explanations that have already been made will not be repeated.

The encoding unit 211 illustrated in Fig. 24 includes an A/D converter 11, a screen rearrangement buffer 12, an arithmetic operation unit 13, an orthogonal transform unit 14, a quantization unit 15, a lossless encoding unit 16, an accumulation buffer 17, an inverse quantization unit 18, an inverse orthogonal transform unit 19, an addition unit 20, a deblocking filter 21, a frame memory 22, a switch 23, an intra prediction unit 24, a motion prediction/compensation unit 25, a predicted image selection unit 26, and a rate control unit 27.

That is, the structure of the encoding unit 211 in Fig. 24 differs from the structure in Fig. 4 only in removing an adaptive offset filter 41 and an adaptive loop filter 42 and in encoding performed by the lossless encoding unit 16 according to the AVC technique instead of the HEVC technique. Hence, the encoding unit 211 performs the encoding operation in block units instead of in CU units.

Encoding operation targets of the lossless encoding unit 16 are basically the same as those of the lossless encoding unit 16 in Fig. 4 except parameters of the adaptive offset filter and the adaptive loop filter. That is, similar to the lossless encoding unit 16 in Fig. 4, the lossless encoding unit 16 obtains intra prediction mode information from the intra prediction unit 24. Further, the lossless encoding unit 16 obtains inter prediction mode information, a motion vector, and information for specifying a reference image from the motion prediction/compensation unit 25.

Similar to the lossless encoding unit 16 in Fig. 4, the lossless encoding unit 16 performs lossless encoding, such as variable-length encoding (CAVLC (Context-Adaptive Variable Length Coding), for example) or arithmetic encoding (CABAC (Context-Adaptive Binary Arithmetic Coding), for example), on the quantized coefficient supplied from the quantization unit 15.

Further, similar to the lossless encoding unit 16 in Fig. 4, the lossless encoding unit 16 performs lossless encoding on intra prediction mode information or inter prediction mode information, a motion vector, information for specifying a reference image, offset filter information and a filter coefficient as encoding information related to encoding. The lossless encoding unit 16 supplies and stores the encoding information and the coefficient subjected to lossless encoding as encoded data into the accumulation buffer 17. In addition, the encoding information subjected to lossless encoding may be header information of the coefficient subjected to lossless encoding.

The deblocking filter 21 performs filtering on the locally decoded image supplied from the addition unit 20, to remove block distortions. The deblocking filter 21 supplies and stores the resultant image into the frame memory 22.

The image stored in the frame memory 22 is then output as a reference image to the intra prediction unit 24 or the motion prediction/compensation unit 25 through the switch 23.

This technique is also applicable to the encoding device 201 based on this AVC technique.

[Example Structure of the Second Embodiment of a Decoding Device]

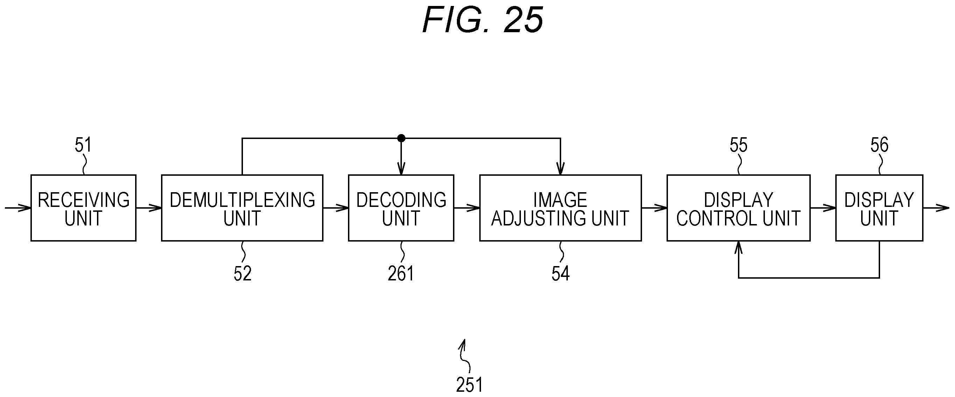

Fig. 25 is a block diagram illustrating an example structure of the second embodiment of a decoding device as an image processing device to which this technique is applied and which decodes an encoded stream transmitted from the encoding device 201 in Fig. 23.

In the structure illustrated in Fig. 25, the same components as those in Fig. 19 are denoted by the same reference numerals as those in Fig. 19. The explanations that have already been made will not be repeated.

The structure of a decoding device 251 in Fig. 25 differs from the structure in Fig. 19 in including a decoding unit 261 instead of a decoding unit 53. The structure of the decoding device 251 is common to the structure in Fig. 19 in including a receiving unit 51, a demultiplexing unit 52, an image adjusting unit 54, a display control unit 55 and a display unit 56.

The receiving unit 51 receives the encoded stream transmitted from the encoding device 201 in Fig. 23 and encoded according to the AVC technique, and supplies the encoded stream to the demultiplexing unit 52. The demultiplexing unit 52 demultiplexes, for example, characteristics information of a dynamic range set according to the standard of the AVC technique and encoded data from the encoded stream supplied from the receiving unit 51. The demultiplexing unit 52 supplies the encoded data to the decoding unit 261. Further, the demultiplexing unit 52 supplies characteristics information of the dynamic range, too, to the decoding unit 261 and the image adjusting unit 54 if necessary.

The decoding unit 261 refers to, for example, SPS, PPS, VUI and SEI supplied from the demultiplexing unit 52 if necessary, and decodes the encoded data supplied from the demultiplexing unit 52 according to the AVC technique. The decoding unit 261 supplies the image such as a HDR image obtained as a result of decoding to the image adjusting unit 54 as an output signal.

The image adjusting unit 54 adjusts a dynamic range of the HDR image supplied as the output signal from the decoding unit 261 based on characteristics information of the dynamic range supplied from the demultiplexing unit 52 if necessary. Further, the image adjusting unit 54 supplies the HDR image as the output signal to the display control unit 55.

That is, the decoding device 251 differs from the decoding device 50 in Fig. 19 only in performing a decoding operation according to the AVC technique.

[Example Structure of a Decoding unit]

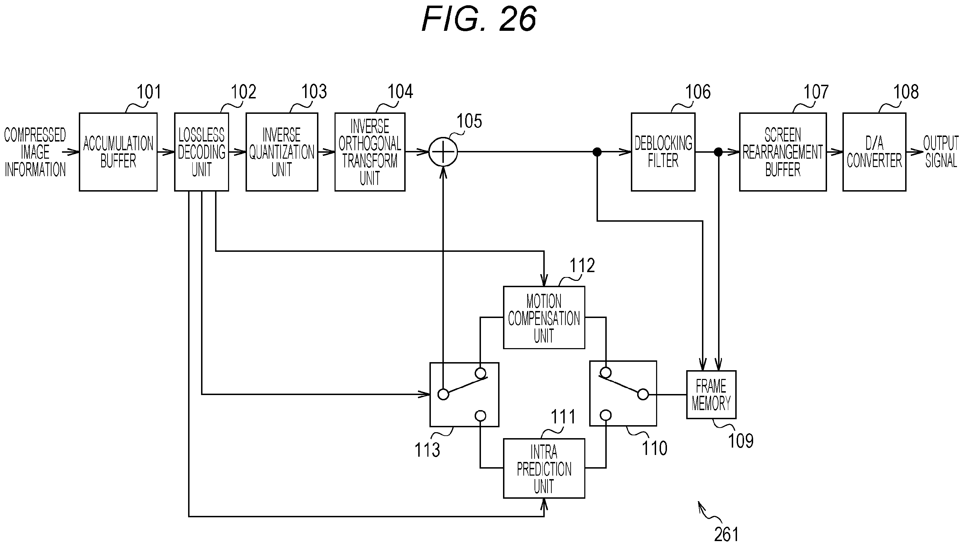

Fig. 26 is a block diagram illustrating an example structure of the decoding unit 261 in Fig. 25.

Of the components illustrated in Fig. 26, the same components as those in Fig. 20 are denoted by the same reference numerals as those in Fig. 20. The explanations that have already been made will not be repeated.

The decoding unit 261 in Fig. 26 includes an accumulation buffer 101, a lossless decoding unit 102, an inverse quantization unit 103, an inverse orthogonal transform unit 104, an addition unit 105, a deblocking filter 106, a screen rearrangement buffer 107, a D/A converter 108, a frame memory 109, a switch 110, an intra prediction unit 111, a motion compensation unit 112, and a switch 113.

The structure of the decoding unit 261 in Fig. 26 differs from the structure in Fig. 20 only in removing an adaptive offset filter 141 and an adaptive loop filter 142 and in performing decoding in the lossless decoding unit 102 according to the AVC technique instead of the HEVC technique. Hence, the decoding unit 261 performs a decoding operation in block units instead of in CU units.

A decoding operation target of the lossless decoding unit 102 is basically the same as that of the lossless decoding unit 102 in Fig. 20 except parameters of an adaptive offset filter and an adaptive loop filter. That is, similar to the lossless decoding unit 102 in Fig. 20, the lossless decoding unit 102 obtains a quantized coefficient and encoding information by performing lossless decoding such as variable-length decoding or arithmetic decoding on the encoded data from the accumulation buffer 101. The lossless decoding unit 102 supplies the quantized coefficient to the inverse quantization unit 103.

Further, similar to the lossless decoding unit 102 in Fig. 20, the lossless decoding unit 102 supplies intra prediction mode information as the encoding information to the intra prediction unit 111, and supplies the motion vector, information for specifying a reference image and inter prediction mode information to the motion compensation unit 112. Furthermore, the lossless decoding unit 102 supplies the intra prediction mode information or the inter prediction mode information as the encoding information to the switch 113.

The deblocking filter 106 performs filtering on the image supplied from the addition unit 105, to remove block distortions. The deblocking filter 106 supplies the resultant image to the frame memory 109 and the screen rearrangement buffer 107.

This technique is also applicable to the decoding device 251 based on this AVC technique.

In addition, the present disclosure can be applied to image encoding devices and image decoding devices which are used when image information (bit streams) compressed through orthogonal transforms such as discrete cosine transforms and the motion compensation as in, for example, the HEVC technique is received via a network medium such as satellite broadcasting, cable television, the Internet, or a portable telephone device. Further, the present technique are also applicable to image encoding devices and image decoding devices which are used on a storage medium such as an optical or magnetic disk or a flash memory.

<Third Embodiment>

[Application to Multi-View Image Encoding/Multi-View Image Decoding]

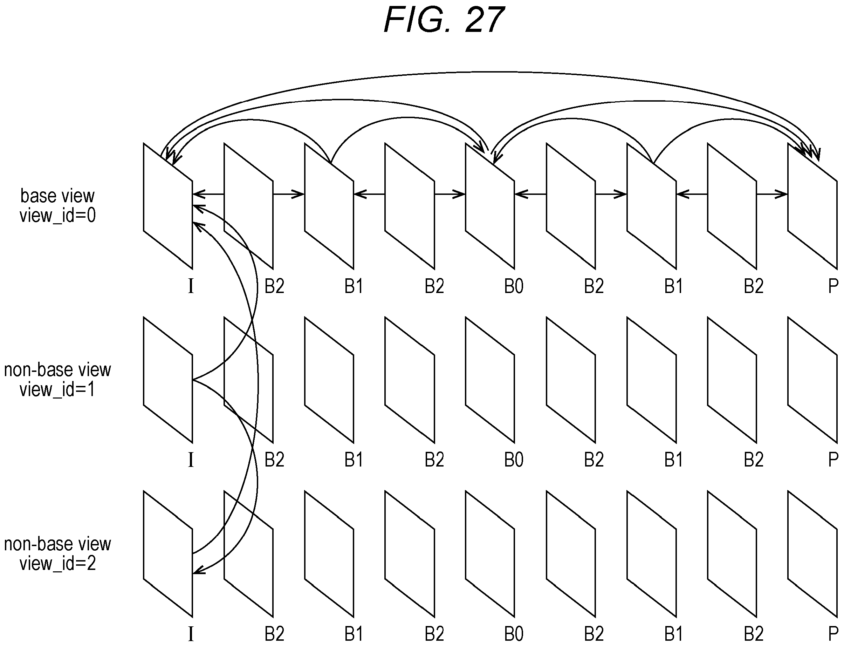

The above series of operations are applicable to multi-view image encoding/multi-view image decoding. Fig. 27 is a view illustrating an example of a multi-view image encoding technique.

As illustrated in Fig. 27, a multi-view image includes images from a plurality of views, and an image from one predetermined view among a plurality of views is specified as a base view image. Each view image other than a base view image is used as a non-base view image.

When multi-view image encoding in Fig. 27 is performed, characteristics information of a dynamic range can be set in each view (identical view). Further, in each view (a different view), characteristics information of a dynamic range set in other views can also be shared.

In this case, the characteristics information of the dynamic range set in the base view is used in at least one non-base view. Alternatively, for example, the characteristics information of the dynamic range set in a non-base view (view_id = i) is used in at least one of the base view and the non-base views (view_id = j).

By this means, it is possible to accurately reproduce a dynamic range of an image.

[Multi-View Image Encoding Device]

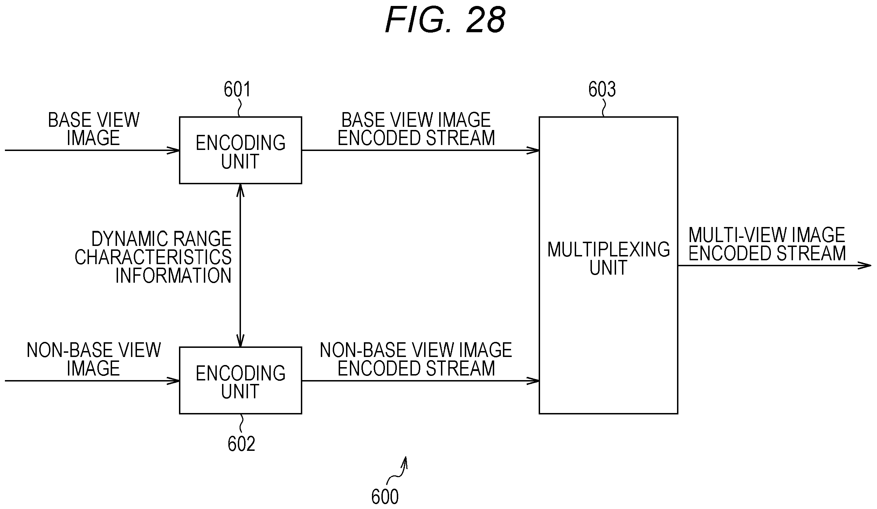

Fig. 28 is a view illustrating a multi-view image encoding device which performs the above multi-view image encoding. As illustrated in Fig. 28, the multi-view image encoding device 600 has an encoding unit 601, an encoding unit 602 and a multiplexing unit 603.

The encoding unit 601 encodes a base view image, and generates a base view image encoded stream. The encoding unit 602 encodes non-base view images, and generates a non-base view image encoded stream. The multiplexing unit 603 multiplexes the base view image encoded stream generated by the encoding unit 601 and the non-base view image encoded streams generated by the encoding unit 602, and generates a multi-view image encoded stream.

The encoding device 1 (Fig. 3) and the encoding device 201 (Fig. 23) are applicable to the encoding unit 601 and the encoding unit 602 of this multi-view image encoding device 600. In this case, the multi-view image encoding device 600 sets and transmits characteristics information of a dynamic range set by the encoding unit 601 and characteristics information of a dynamic range set by the encoding unit 602.

In addition, as described above, the characteristics information of the dynamic range set by the encoding unit 601 may be set to be shared between the encoding unit 601 and the encoding unit 602 and transmitted. In addition, the characteristics information of the dynamic range collectively set by the encoding unit 602 may be set to be shared between the encoding unit 601 and the encoding unit 602 and transmitted.

[Multi-View Image Decoding Device]

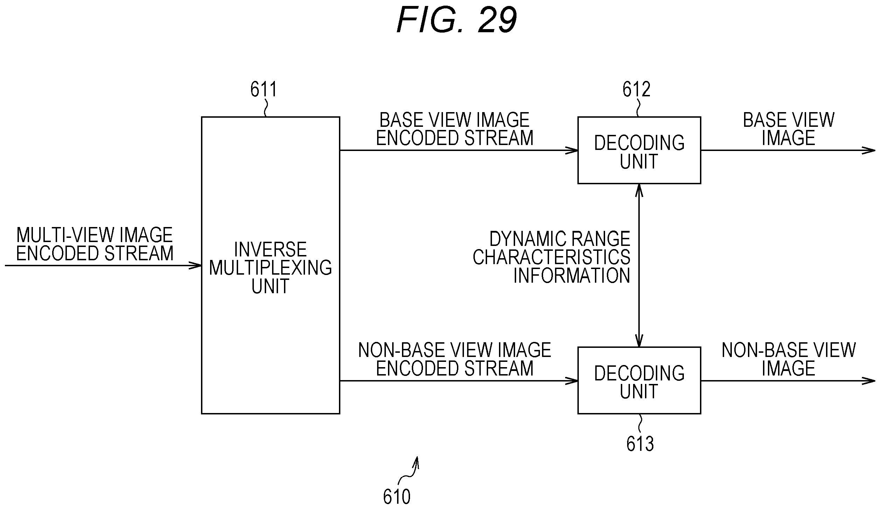

Fig. 29 is a view a multi-view image decoding device which performs the above multi-view image decoding. As illustrated in Fig. 29, the multi-view image decoding device 610 has an inverse multiplexing unit 611, a decoding unit 612 and a decoding unit 613.

The inverse multiplexing unit 611 inversely multiplexes the multi-view image encoded stream obtained by multiplexing the base view image encoded stream and the non-base view image encoded streams, and demultiplexes the base view image encoded stream and the non-base view image encoded streams. The decoding unit 612 decodes the base view image encoded stream demultiplexed from the inverse multiplexing unit 611, and obtains the base view image. The decoding unit 613 decodes the non-base view image encoded streams demultiplexed from the inverse multiplexing unit 611, and obtains the non-base view images.

The decoding device 50 (Fig. 19) and the decoding device 251 (Fig. 25) are applicable to the decoding unit 612 and the decoding unit 613 of this multi-view image decoding device 610. In this case, the multi-view image decoding device 610 performs an operation using the characteristics information of the dynamic range set by the encoding unit 601 and decoded by the decoding unit 612, and the characteristics information of the dynamic range set by the encoding unit 602 and decoded by the decoding unit 613.

In addition, as described above, the characteristics information of the dynamic range set by the encoding unit 601 (or the encoding unit 602) may be set to be shared between the encoding unit 601 and the encoding unit 602 and transmitted. In this case, the multi-view image decoding device 610 performs an operation using the characteristics information of the dynamic range set by the encoding unit 601 (or the encoding unit 602) and decoded by the decoding unit 612 (or the decoding unit 613).

<6. Fourth Embodiment>

[Application to Hierarchical Image Encoding/Hierarchical Image Decoding]

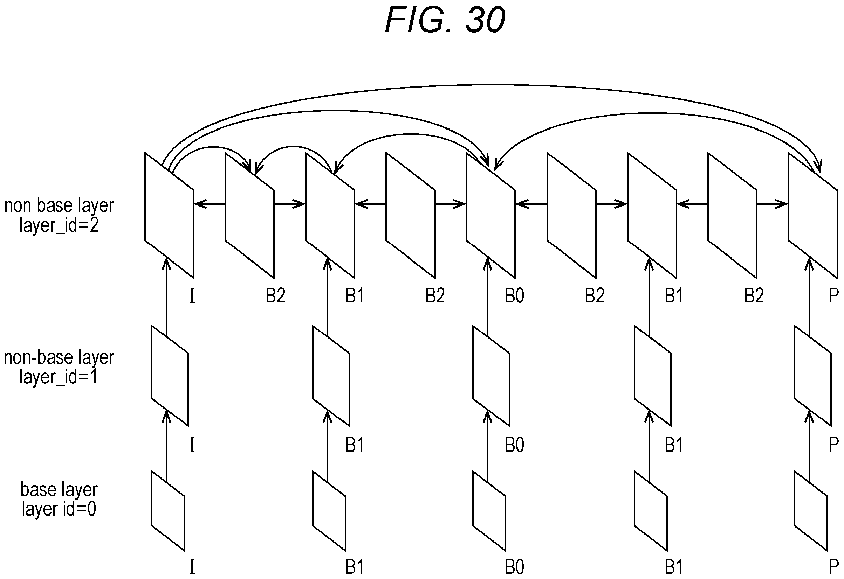

The above series of operations are applicable to hierarchical image encoding/hierarchical image decoding. Fig. 30 illustrates an example of a multi-view image encoding technique.
As illustrated in Fig. 30, a hierarchical image includes images of a plurality of layers (resolutions), and an image of one predetermined layer of a plurality of resolutions is specified as a base layer image. Each layer image other than the base layer image is used as a non-base layer image.
When hierarchical image encoding (spatial scalability) as in Fig. 30 is performed, characteristics information of a dynamic range can be set in each layer (identical layer). Further, in each layer (a different layer), characteristics information of a dynamic range set in another layer can be shared.
In this case, the characteristics information of the dynamic range set in the base layer is used in at least one non-base layer. Alternatively, for example, the characteristics information of the dynamic range set in a non-base layer (layer_id = i) is used in at least one of the base layer and the non-base layers (layer_id = j).
By this means, it is possible to accurately reproduce a dynamic range of an image.

[Hierarchical Image Encoding Device]

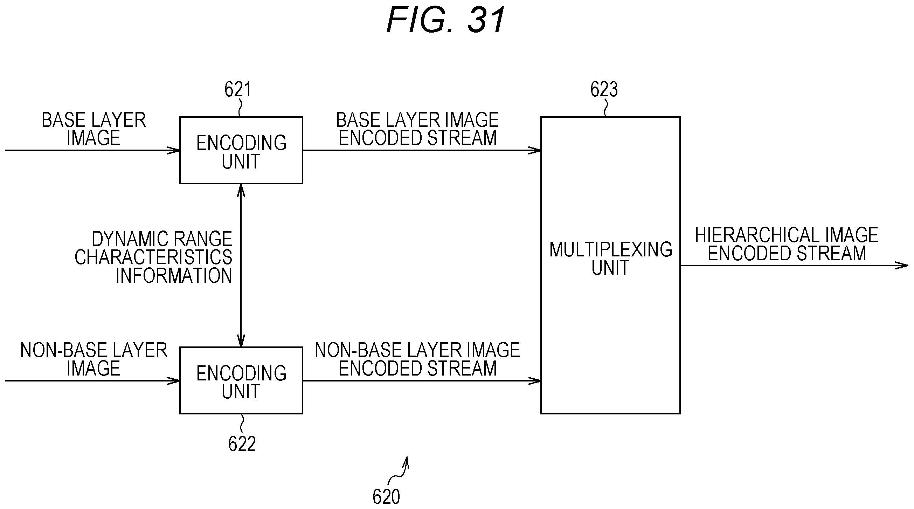

Fig. 31 is a view illustrating a hierarchical image encoding device which performs the above hierarchical image encoding. As illustrated in Fig. 31, the hierarchical image encoding device 620 has an encoding unit 621, an encoding unit 622 and a multiplexing unit 623.
The encoding unit 621 encodes a base layer image, and generates a base layer image encoded stream. The encoding unit 622 encodes non-base layer images, and generates non-base layer image encoded streams. The multiplexing unit 623 multiplexes the base layer image encoded stream generated by the encoding unit 621 and the non-base layer image encoded streams generated by the encoding unit 622, and generates a hierarchical image encoded stream.
The encoding device 1 (Fig. 3) and the encoding device 201 (Fig. 23) are applicable to the encoding unit 621 and the encoding unit 622 of this hierarchical image encoding device 620. In this case, the hierarchical image encoding device 620 sets and transmits characteristics information of a dynamic range set by the encoding unit 621 and characteristics information of a dynamic range set by the encoding unit 602.
In addition, as described above, the characteristics information of the dynamic range set by the encoding unit 621 may be set to be shared between the encoding unit 621 and the encoding unit 622 and transmitted. Conversely, the characteristics information of the dynamic range set by the encoding unit 622 may be set to be shared between the encoding unit 621 and the encoding unit 622 and transmitted.

[Hierarchical Image Decoding Device]

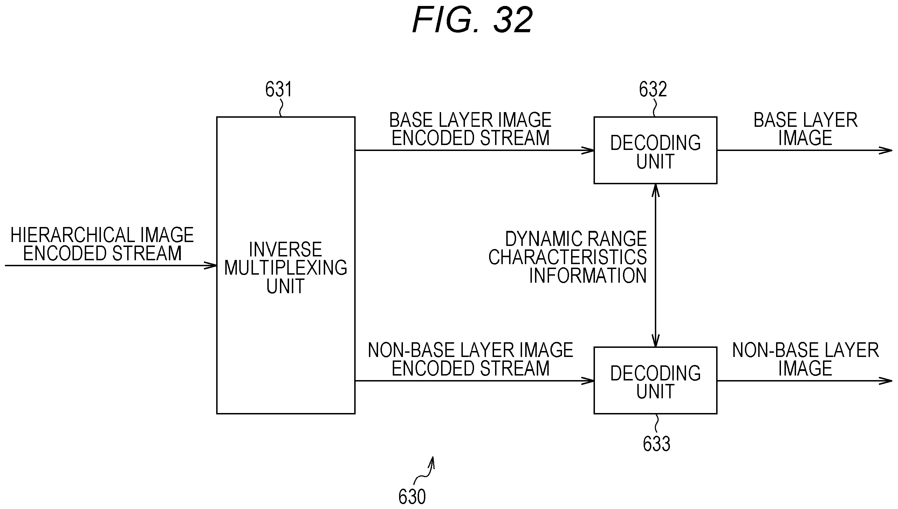

Fig. 32 is a view illustrating a hierarchical image decoding device which performs the above hierarchical image decoding. As illustrated in Fig. 32, the hierarchical image decoding device 630 has an inverse multiplexing unit 631, a decoding unit 632 and a decoding unit 633.
The inverse multiplexing unit 631 inversely multiplexes the hierarchical image encoded stream obtained by multiplexing the base layer image encoded stream and the non-base layer image encoded streams, and demultiplexes the base layer image encoded stream and the non-base layer image encoded streams. The decoding unit 632 decodes the base layer image encoded stream demultiplexed by the inverse multiplexing unit 631, and obtains a base layer image. The decoding unit 633 decodes the non-base layer image encoded streams extracted by the inverse multiplexing unit 631, and obtains non-base layer images.
The decoding device 50 (Fig. 19) and the decoding device 251 (Fig. 25) are applicable to the decoding unit 632 and the decoding unit 633 of this hierarchical image decoding device 630. In this case, the hierarchical image decoding device 630 performs an operation using the characteristics information of the dynamic range set by the encoding unit 621 and decoded by the decoding unit 632, and the characteristics information of the dynamic range set by the encoding unit 622 and decoded by the decoding unit 633.
In addition, as described above, the characteristics information of the dynamic range set by the encoding unit 621 (or the encoding unit 622) may be set to be shared between the encoding unit 621 and the encoding unit 622 and transmitted. In this case, the hierarchical image decoding device 630 performs an operation using the characteristics information of the dynamic range set by the encoding unit 621 (or the encoding unit 622) and decoded by the decoding unit 632 (or the decoding unit 633).

<Fifth Embodiment>

[Example Structure of Computer]

The above described series of operations can be performed by hardware, and can also be performed by software. When the series of operations are to be performed by software, the programs forming the software are installed in a computer. Here, the computer may be a computer incorporated into special-purpose hardware, or may be a general-purpose personal computer which can execute various kinds of functions as various kinds of programs are installed thereinto.

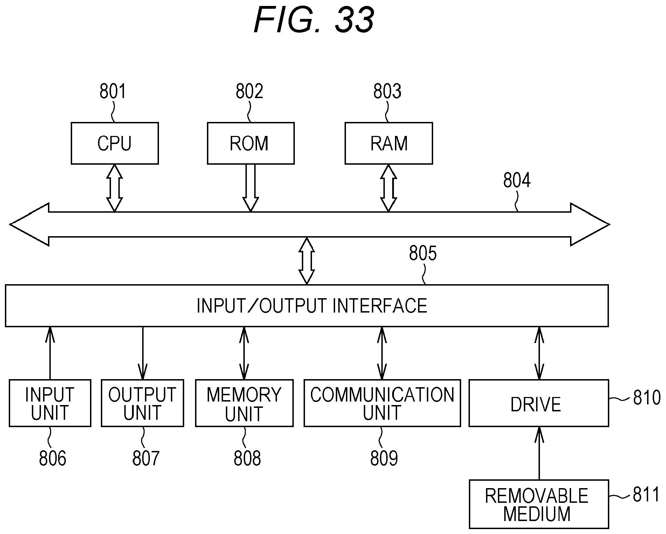

Fig. 33 is a block diagram illustrating an example structure of the hardware of the computer which performs the above described series of operations in accordance with programs.

In a computer 800, a CPU (Central Processing Unit) 801, a ROM (Read Only Memory) 802, and a RAM (Random Access Memory) 803 are connected to one another by a bus 804.

An input/output interface 805 is further connected to the bus 804. An input unit 806, an output unit 807, a storage unit 808, a communication unit 809, and a drive 810 are connected to the input/output interface 805.

The input unit 806 is formed with a keyboard, a mouse, a microphone, and the like. The output unit 807 is formed with a display, a speaker, and the like. The storage unit 808 is formed with a hard disk, a nonvolatile memory, or the like. The communication unit 809 is formed with a network interface or the like. The drive 810 drives a removable medium 811 such as a magnetic disk, an optical disk, a magnetooptical disk, or a semiconductor memory.

In the computer having the above described structure, the CPU 801 loads a program stored in the storage unit 808 into the RAM 803 via the input/output interface 805 and the bus 804, and executes the program, so that the above described series of operations are performed.

The programs to be executed by the computer 800 (CPU 801) may be recorded on the removable medium 811 as a package medium to be provided, for example. Alternatively, the programs can be provided via a wired or wireless transmission medium such as a local area network, the Internet, or digital satellite broadcasting.

In the computer, the programs can be installed in the storage unit 808 through the input/output interface 805 by attaching the removable medium 811 to the drive 810. Further, the programs can be received by the communication unit 809 through a wired or wireless transmission medium, and installed in the storage unit 808. In addition, the programs can be preinstalled in the ROM 802 and the storage unit 808.

The program to be executed by the computer may be a program for carrying out processes in chronological order in accordance with the sequence described in this specification, or a program for carrying out processes in parallel or whenever necessary such as in response to a call.

In this specification, the step written in the program to be recorded in a recording medium includes operations to be performed in parallel or independently of one another if not necessarily in chronological order, as well as operations to be performed in chronological order in accordance with the sequence described herein.

Further, in this specification, a system means an entire apparatus formed with a plurality of devices.

Also, in the above described examples, any structure described as one device (or one processing unit) may be divided into two or more devices (or processing units). Conversely, any structure described as two or more devices (or processing units) may be combined to form one device (or one processing unit). Also, it is of course possible to add a structure other than the above described ones to the structure of any of the devices (or any of the processing units). Further, as long as the structure and function of the entire system substantively remain the same, part of the structure of a device (or a processing unit) may be incorporated into another device (or another processing unit). That is, embodiments of the present technique are not limited to the above described embodiments, and various modifications may be made to them without departing from the scope of the technique.

The image encoding device and the image decoding device according to the above embodiments can be applied to various electronic devices such as transmitters or receivers for satellite broadcasting, wired broadcasting of a cable TV, distribution on the Internet, and distribution to terminals by way of cellular communication, recording devices which record images in media such as optical disks, magnetic disks and flash memories or reproducing devices which reproduce images from these storage media. Hereinafter, four application examples will be described.

<Application Example>

[First Application Example: Television Receiver]

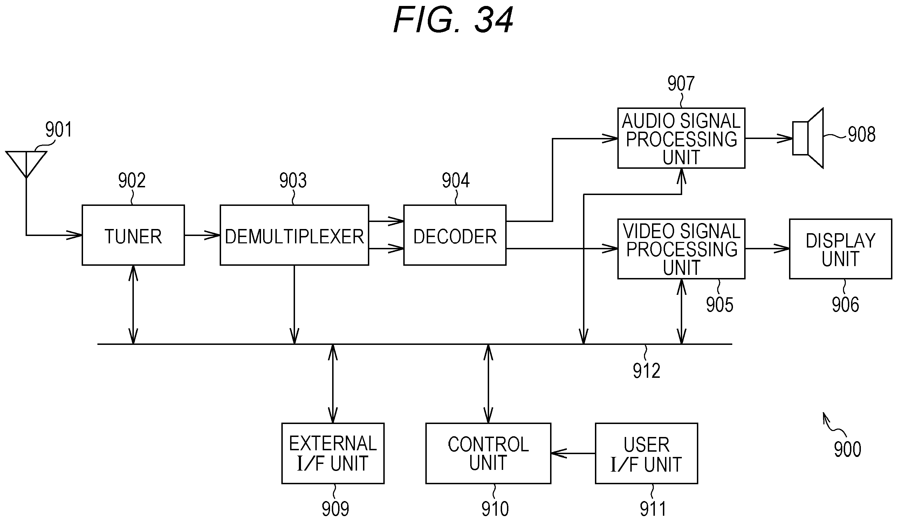

Fig. 34 illustrates an example of a schematic structure of a television device to which above embodiments are applied. A television device 900 includes an antenna 901, a tuner 902, a demultiplexer 903, a decoder 904, a video signal processing unit 905, a display unit 906, an audio signal processing unit 907, a speaker 908, an external interface 909, a control unit 910, a user interface 911 and a bus 912.

The tuner 902 extracts a desired channel signal from a broadcast signals received at the antenna 901, and demodulates the extracted signal. Further, the tuner 902 outputs an encoded bit stream obtained as a result of demodulation, to the demultiplexer 903. That is, the tuner 902 plays a role of a transmitter in the television device 900 which receives encoded streams of encoded images.

The demultiplexer 903 separates a video stream and an audio stream of the show to be viewed from the encoded bit stream, and outputs each separated stream to the decoder 904. Further, the demultiplexer 903 extracts auxiliary data such as EPG (Electronic Program Guide) from the encoded bit stream, and supplies the extracted data to the control unit 910. In addition, the demultiplexer 903 may perform descrambling when the encoded bit stream is scrambled.

The decoder 904 decodes the video stream and the audio stream input from the demultiplexer 903. Further, the decoder 904 outputs video data generated by a decoding operation, to the video signal processing unit 905. Furthermore, the decoder 904 outputs audio data generated by a decoding operation, to the audio signal processing unit 907.

The video signal processing unit 905 reproduces the video data input from the decoder 904, and displays a video image on the display unit 906. Further, the video signal processing unit 905 may display on the display unit 906 an application screen supplied through a network. Furthermore, the video signal processing unit 905 may perform an additional operation such as noise removal on the video data according to a setting. Still further, the video signal processing unit 905 may generate a GUI (Graphical User Interface) image such as a menu, buttons, a cursor, and superimpose the generated image on an output image.

The display unit 906 is driven by a drive signal supplied from the video signal processing unit 905, and displays a video image or an image on a display screen of a display device (such as a liquid crystal display, a plasma display or an OELD (Organic ElectroLuminescence Display) (organic EL display)).

The audio signal processing unit 907 performs a reproducing operation such as a D/A conversion and amplification on the audio data input from the decoder 904, and outputs an audio from the speaker 908. Further, the audio signal processing unit 907 may perform an additional operation such as noise removal on the audio data.

The external interface 909 is an interface which connects the television device 900 and an external device or the network. For example, a video stream or an audio stream received through the external interface 909 may be decoded by the decoder 904. That is, the external interface 909 also plays a role of a transmitter in the television device 900 which receives encoded streams of encoded images.

The control unit 910 has a processor such as a CPU, and memories such as a RAM and a ROM. The memory stores programs to be executed by the CPU, program data, EPG data, and data acquired through the network. The program stored in the memory is read and executed by the CPU at the time of activation of the television device 900. By executing the program, the CPU controls the operation of the television device 900 according to, for example, an operation signal input from the user interface 911.

The user interface unit 911 is connected to the control unit 910. The user interface 911 has, for example, buttons and switches which a user uses to operate the television device 900, and a reception unit which receives a remote control signal. The user interface 911 detects a user's operation through these components, generates an operation signal and outputs the generated operation signal to the control unit 910.

The bus 912 mutually connects the tuner 902, the demultiplexer 903, the decoder 904, the video signal processing unit 905, the audio signal processing unit 907, the external interface 909 and the control unit 910.

In the television device 900 having this structure, the decoder 904 has a function of the image decoding device according to the above embodiments. By this means, when the television device 900 decodes images, it is possible to accurately reproduce a dynamic range of an image.

[Second Application Example: Portable Telephone Device]

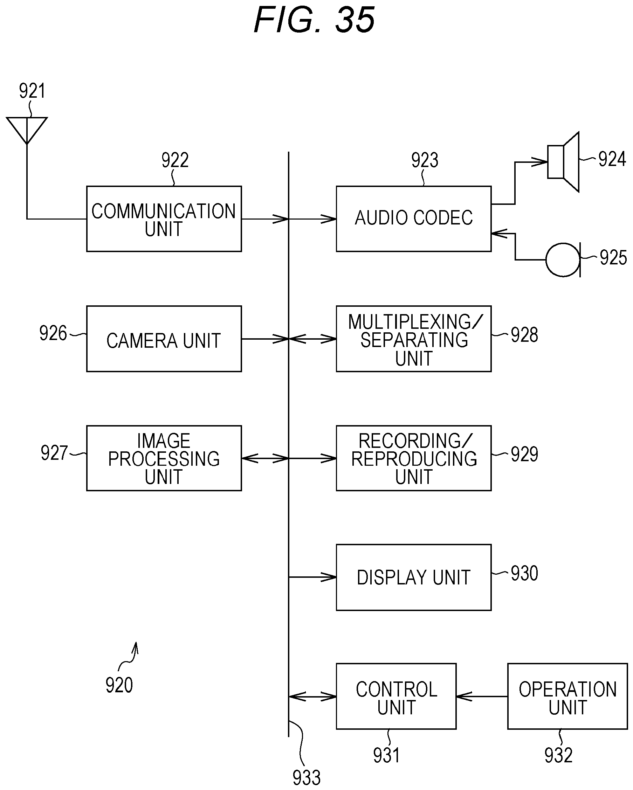

Fig. 35 illustrates an example of a schematic structure of a portable telephone device to which the above embodiments are applied. A portable telephone device 920 includes an antenna 921, a communication unit 922, an audio codec 923, a speaker 924, a microphone 925, a camera unit 926, an image processing unit 927, a multiplexing/separating unit 928, a recording/reproducing unit 929, a display unit 930, a control unit 931, an operation unit 932 and a bus 933.

The antenna 921 is connected to the communication unit 922. The speaker 924 and the microphone 925 are connected to the audio codec 923. The operation unit 932 is connected to the control unit 931. The bus 933 mutually connects the communication unit 922, the audio codec 923, the camera unit 926, the image processing unit 927, the multiplexing/separating unit 928, the recording/reproducing unit 929, the display unit 930, and the control unit 931.

The portable telephone device 920 performs various operations such as transmission and reception of audio signals, transmission and reception of electronic mail and image data, image capturing, and data recording, in various kinds of modes such as a voice communication mode, a data communication mode, an image capturing mode and a video telephone mode.

In the audio communication mode, an analog audio signal generated at the microphone 925 is supplied to the audio codec 923. The audio codec 923 converts the analog audio signal into audio data, and performs an A/D conversion on and compresses the converted audio data. Further, the audio codec 923 outputs the compressed audio data to the communication unit 922. The communication unit 922 encodes and modulates audio data, and generates a transmission signal. Further, the communication unit 922 transmits the generated transmission signal to a base station (not illustrated) through the antenna 921. Furthermore, the communication unit 922 amplifies and performs a frequency conversion on a radio signal received through the antenna 921, and obtains the received signal. Still further, the communication unit 922 demodulates and decodes the received signal, generates audio data and outputs the generated audio data to the audio codec 923. The audio codec 923 decompresses and performs a D/A conversion on audio data, and generates an analog audio signal. Further, the audio codec 923 supplies the generated audio signal to the speaker 924, and outputs the audio.

Furthermore, in the data communication mode, for example, the control unit 931 generates text data which configures an electronic mail according to a user's operation through the operation unit 932. Still further, the control unit 931 displays a text on the display unit 930. Moreover, the control unit 931 generates electronic mail data according to a transmission instruction from the user through the operation unit 932, and outputs the generated electronic mail data to the communication unit 922. The communication unit 922 encodes and modulates electronic mail data, and generates a transmission signal. Further, the communication unit 922 transmits the generated transmission signal to a base station (not illustrated) through the antenna 921. Furthermore, the communication unit 922 amplifies and performs a frequency conversion on a radio signal received through the antenna 921, and obtains the received signal. Still further, the communication unit 922 demodulates and decodes the received signal, restores electronic mail data and outputs the restored electronic mail data to the control unit 931. The control unit 931 displays content of the electronic mail on the display unit 930, and stores the electronic mail data in a storage medium of the recording/reproducing unit 929.

The recording/reproducing unit 929 has an arbitrary readable/writable storage medium. For example, the storage medium may be a built-in storage medium such as a RAM or a flash memory, and may be a storage medium which is externally attached such as a hard disk, a magnetic disk, a magnetooptical disk, an optical disk, a USB (Universal Serial Bus) memory, or a memory card.

Further, in the image capturing mode, for example, the camera unit 926 captures an image of an object, generates image data and outputs the generated image data to the image processing unit 927. The image processing unit 927 encodes image data input from the camera unit 926, and stores the encoded stream in the storage medium of the recording/reproducing unit 929.

Further, in the video telephone mode, for example, the multiplexing/separating unit 928 multiplexes the video stream encoded by the image processing unit 927 and the audio stream input from the audio codec 923, and outputs the multiplexed stream to the communication unit 922. The communication unit 922 encodes and modulates the stream, and generates a transmission signal. Further, the communication unit 922 transmits the generated transmission signal to a base station (not illustrated) through the antenna 921. Furthermore, the communication unit 922 amplifies and performs a frequency conversion on a radio signal received through the antenna 921, and obtains the received signal. These transmission signal and received signal may include encoded bit streams. Further, the communication unit 922 demodulates and decodes the received signal, restores the stream and outputs the restored stream to the multiplexing/separating unit 928. The multiplexing/separating unit 928 separates the video stream and the audio stream from the input stream, and outputs the video stream to the image processing unit 927 and the audio stream to the audio codec 923. The image processing unit 927 decodes the video stream, and generates the video data. The video data is supplied to the display unit 930, and the display unit 930 displays a series of images. The audio codec 923 decompresses and performs a D/A conversion on the audio stream, and generates an analog audio signal. Further, the audio codec 923 supplies the generated audio signal to the speaker 924, and outputs the audio.

In the portable telephone device 920 having the structure, the image processing unit 927 has functions of the image encoding device and the image decoding device according to the above embodiments. By this means, upon encoding and decoding of images in the portable telephone device 920, it is possible to accurately reproduce a dynamic range of an image.

[Third Application Example: Recording/Reproducing Device]

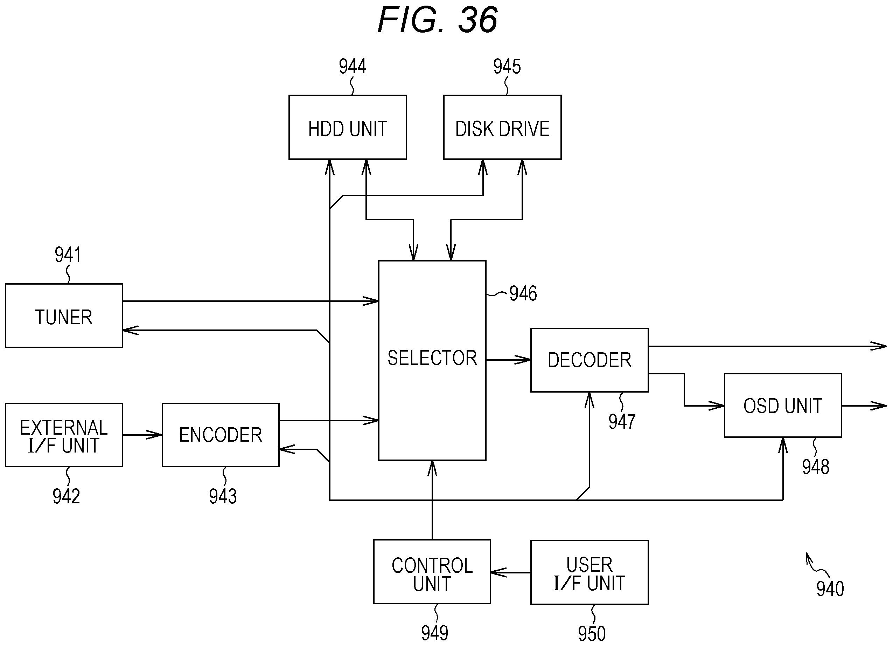

Fig. 36 illustrates an example of a schematic structure of a recording/reproducing device to which above embodiments are applied. A recording/reproducing device 940 encodes, for example, audio data and video data of the received broadcast show, and records the data in the recording medium. Further, the recording/reproducing device 940 encodes, for example, the audio data and the video data obtained from another device, and records the data in the recording medium. Further, the recording/reproducing device 940 reproduces data recorded in the recording medium on a monitor and a speaker according to, for example, a user's instruction. In this case, the recording/reproducing device 940 decodes the audio data and the video data.

The recording/reproducing device 940 includes a tuner 941, an external interface unit 942, an encoder 943, a HDD (Hard Disk Drive) unit 944, a disk drive 945, a selector 946, a decoder 947, an OSD (On-Screen Display) unit 948, a control unit 949, and a user interface 950.

The tuner 941 extracts a desired channel signal from a broadcast signals received at an antenna (not illustrated), and demodulates the extracted signal. Further, the tuner 941 outputs an encoded bit stream obtained by demodulation, to the selector 946. That is, the tuner 941 plays a role of a transmitter in the recording/reproducing device 940.

The external interface unit 942 is an interface which connects the recording/reproducing device 940 and an external device or the network. The external interface unit 942 is formed with an IEEE1394 interface, a network interface unit, a USB interface, a flash memory interface, and the like. For example, the video data and the audio data received through the external interface unit 942 are input to the encoder 943. That is, the external interface unit 942 plays a role of the transmitter in the recording/reproducing device 940.

When the video data and the audio data input from the external interface unit 942 are not encoded, the encoder 943 encodes the video data and the audio data. Further, the encoder 943 outputs an encoded bit stream to the selector 946.

The HDD 944 records encoded bit streams obtained by compressing content data such as video images and audio, various programs and other data in the hard disk inside. Further, the HDD 944 reads these items of data from the hard disk at the time of reproduction of a video image and an audio.

The disk drive 945 records and reads data to and from an attached recording medium. A recording medium attached to the disk drive 945 is, for example, a DVD disk (such as DVD-Video, DVD-RAM, DVD-R, DVD-RW, DVD+R and DVD+RW) or a Blu-ray (registered trademark) disk.

At the time of video and audio recording, the selector 946 selects an encoded bit stream input from the tuner 941 or the encoder 943, and outputs the selected encoded bit stream to the HDD 944 or the disk drive 945. Further, the selector 946 outputs an encoded bit stream input from the HDD 944 or the disk drive 945 to the decoder 947 at the time of video and audio reproduction.

The decoder 947 decodes the encoded bit stream, and generates video data and audio data. Further, the decoder 947 outputs the generated video data to the OSD 948. Furthermore, the decoder 904 outputs the generated audio data to an external speaker.

The OSD 948 reproduces video data input from the decoder 947, and displays a video image. Further, the OSD 948 may superimpose a GUI image such as a menu, buttons or a cursor on a video image to be displayed.

The control unit 949 has a processor such as a CPU, and memories such as a RAM and a ROM. The memory stores programs to be executed by the CPU, and program data. The program stored in the memory is read and executed by the CPU at, for example, the time of activation of the recording/reproducing device 940. By executing the program, the CPU controls the operation of the recording/reproducing device 940 according to, for example, an operation signal input from the user interface 950.

The user interface 950 is connected to the control unit 949. The user interface 950 has, for example, buttons and switches which a user uses to operate the recording/reproducing device 940, and a reception unit which receives a remote control signal. The user interface 950 detects a user's operation through these components, generates an operation signal and outputs the generated operation signal to the control unit 949.

In the recording/reproducing device 940 having this structure, the encoder 943 has a function of the image encoding device according to the above embodiments. Further, the decoder 947 has a function of the image decoding device according to the above embodiments. By this means, upon encoding and decoding of images in the recording/reproducing device 940, it is possible to accurately reproduce a dynamic range of an image.

[Fourth Application Example: Imaging Device]

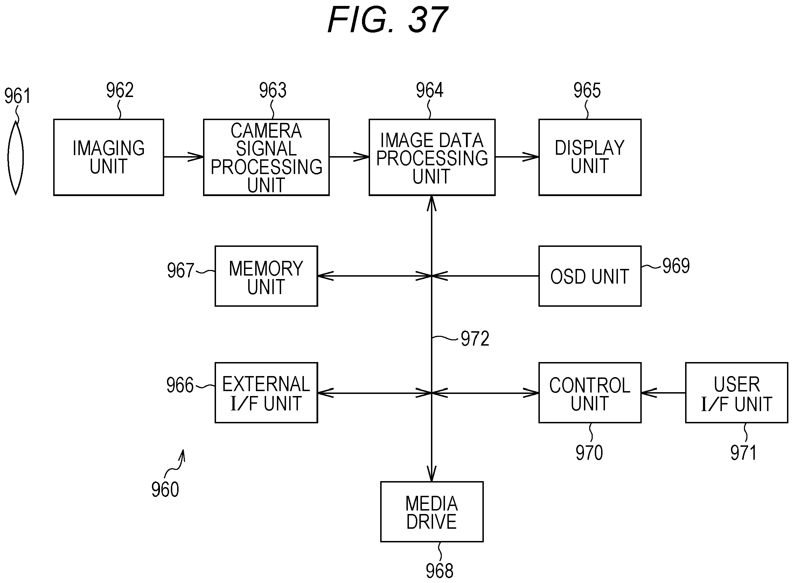

Fig. 37 illustrates an example of a schematic structure of an imaging device to which above embodiments are applied. An imaging device 960 captures an image of an object, generates an image, encodes image data and records the image data in a recording medium.

The imaging device 960 includes an optical block 961, an imaging unit 962, a signal processing unit 963, an image processing unit 964, a display unit 965, an external interface 966, a memory 967, a media drive 968, an OSD 969, a control unit 970, a user interface 971 and a bus 972.

The optical block 961 is connected to the imaging unit 962. The imaging unit 962 is connected to the signal processing unit 963. The display unit 965 is connected to the image processing unit 964. The user interface 971 is connected to the control unit 970. The bus 972 mutually connects the image processing unit 964, the external interface 966, the memory 967, the media drive 968, the OSD 969 and the control unit 970.

The optical block 961 has a focus lens, a diaphragm, and the like. The optical block 961 forms an optical image of an object on the imaging surface of the imaging unit 962. The imaging unit 962 has an image sensor such as a CCD (Charge Coupled Device) or a CMOS (Complementary Metal Oxide Semiconductor), and converts an optical image formed on the imaging surface into an image signal as an electric signal by photoelectric conversion. Further, the imaging unit 962 outputs the image signal to the signal processing unit 963.

The signal processing unit 963 performs various kinds of camera signal operations such as a knee correction, a gamma correction, and a color correction on the image signal input from the imaging unit 962. The signal processing unit 963 outputs image data subjected to the camera signal operation, to the image processing unit 964.

The image processing unit 964 encodes the image data input from the signal processing unit 963, and generates encoded data. Further, the image processing unit 964 outputs the generated encoded data to the external interface 966 or the media drive 968. Furthermore, the image processing unit 964 decodes the encoded data input from the external interface 966 or the media drive 968, and generates image data. Still further, the image processing unit 964 outputs the generated image data to the display unit 965. Moreover, the image processing unit 964 may output the image data input from the signal processing unit 963 to the display unit 965, and display an image. Further, the image processing unit 964 may superimpose display data obtained from the OSD 969, on the image to be output to the display unit 965.

The OSD 969 generates a GUI image such as a menu, buttons or a cursor, and outputs the generated image to the image processing unit 964.

The external interface 966 is formed as, for example, a USB input/output terminal. The external interface 966 connects the imaging device 960 and a printer at, for example, the time of printing of an image. Further, the external interface 966 is connected with a drive if necessary. The drive is attached with a removable medium such as a magnetic disk or an optical disk, and the program read from the removable medium can be installed in the imaging device 960. Further, the external interface 966 includes a network interface connected to a network such as a LAN or the Internet. That is, the external interface 966 plays a role of the transmitter in the imaging device 960.

A recording medium attached to the media drive 968 may be an arbitrary readable/rewritable removable medium such as a magnetic disk, a magnetooptical disk, an optical disk, or a semiconductor memory. Further, a recording medium is attached to the media drive 968 and fixed, and a non-portable storage unit such as a built-in hard disk drive or an SSD (Solid State Drive) may be formed.

The control unit 970 has a processor such as a CPU, and memories such as a RAM and a ROM. The memory stores programs to be executed by the CPU, and program data. The program stored in the memory is read and executed by the CPU at, for example, the time of activation of the imaging device 960. By executing the program, the CPU controls the operation of the imaging device 960 according to, for example, an operation signal input from the user interface 971.

The user interface 971 is connected to the control unit 970. The user interface 971 has, for example, buttons and switches which a user uses to operate the imaging device 960. The user interface 971 detects a user's operation through these components, generates an operation signal and outputs the generated operation signal to the control unit 970.

In the imaging device 960 having the structure, the image processing unit 964 has functions of the image encoding device and the image decoding device according to the above embodiments. By this means, upon encoding and decoding of images in the imaging device 960, it is possible to accurately reproduce a dynamic range of an image.

It should be noted that embodiments of the present technique are not limited to the above described embodiments, and various modifications may be made to them without departing from the scope of the present technique.

For example, the display control unit 55 and the display unit 56 in Fig. 19 may be provided outside the decoding device 50.

Further, the present technique can employ a configuration of cloud computing which shares one function among a plurality of devices through a network and performs an operation in collaboration.

Furthermore, each step described in the above flowchart can be executed by one device or be shared among a plurality of devices and executed.

Still further, when one step includes a plurality of operations, a plurality of operations included in this one step can be executed by one device or shared among a plurality of devices and executed.

In addition, an example has been described in this description where various pieces of information such as characteristics information of a dynamic range are multiplexed on with encoded stream, and are transmitted from an encoding side to a decoding side. However, a method of transmitting these pieces of information is not limited to this example. For example, these pieces of information may be transmitted or recorded as different data associated with an encoded bit stream without being multiplexed with the encoded bit stream. Meanwhile, the term "associate" means linking an image (or part of an image such as a slice or a block) included in a bit stream or information associated with this image at the time of decoding. That is, the information may be transmitted on a transmission channel different from that of an image (or a bit stream). Further, information may be recorded in a recording medium (or another recording area of a single recording medium) different from that of an image (or a bit stream). Furthermore, information and an image (or a bit stream) may be associated with each other in arbitrary units such as a plurality of frames, one frame or a portion in a frame.

Still further, in the present embodiment, a flag is not limited to either-or such as a presence or an absence (0 or 1), and includes information which enables identification of a specific item from a plurality of options.

Although suitable embodiments of the present disclosure have been described in detail with reference to the accompanying drawings, the present disclosure is not limited to these examples. Obviously, one who has common knowledge in a field of a technique to which the present disclosure belongs can arrive at various modification examples and correction examples within a scope of a technical idea described in the claims, and these examples naturally belong to the technical scope of the present disclosure.

REFERENCE SIGNS LIST

1       Encoding device
2       Encoding unit
3       Setting unit
4       Transmitting unit
50      Decoding device
51      Receiving unit
52      Demultiplexing unit
53      Decoding unit
54      Image adjusting unit
55      Display control unit
56      Display unit
201     Encoding device
211     Encoding unit
251     Decoding device
261     Decoding unit

**Claims**

1.   An image processing device (50), comprising:
     at least one processor configured to:

     decode image data to produce decoded image data;
     acquire dynamic range characteristic information when a video usability information (VUI) syntax or a sequence parameter set (SPS) syntax having a flag indicating presence/absence of the dynamic range characteristic information associated with the image data indicates the presence of the dynamic range characteristic information, wherein the presence of the dynamic range characteristic information is indicated when the flag is one and the absence of the dynamic range characteristic information is indicated when the flag is zero, the dynamic range characteristic information including:

          maximum image white level information (max_image_white_level);
          maximum image white level code value information (max_white_level_code_value);
          reference screen luminance information (ref_screen_lw); and
          white level code value information (white_level_code_value), the maximum image white level information indicating a maximum white level setting of luminance of the image data as a percentage relative to a reference white level setting, the maximum image white level code value information indicating a luminance code value for the maximum white level setting, the reference screen luminance information indicating the reference white level setting, the white level code value information indicating a luminance code value for the reference white level setting, the reference white level setting to be used in a process of developing an image; and

adjust a dynamic range of the decoded image data based upon the dynamic range characteristic information.

2. The image processing device of claim 1, wherein the white level code value information is indicative of the luminance code value for the reference white level setting and a plurality of luminance code values for a plurality of white level settings.

3. The image processing device of claim 1, wherein the dynamic range characteristic information further includes black level code value information indicating a luminance code value of a black level.

4. The image processing device of claim 1, wherein the dynamic range characteristic information is included in video usability information.

5. The image processing device of claim 1, wherein the dynamic range characteristic information is included in tone_mapping_information SEI (Supplemental Enhancement Information).

6. The image processing device of claim 1, wherein the dynamic range characteristic information is included in luminance dynamic range Supplemental Enhancement Information (SEI).

7. An image processing device (1), comprising:
   at least one processor configured to:

   encode image data to produce encoded image data;
   provide dynamic range characteristic information, when a video usability information (VUI) syntax or a sequence parameter set (SPS) syntax having a flag indicating presence/absence of dynamic range characteristic information associated with the image data indicates the presence of the dynamic range characteristic information, wherein the presence of the dynamic range characteristic information is indicated when the flag is one and the absence of the dynamic range characteristic information is indicated when the flag is zero, the dynamic range characteristic information including:

   maximum image white level information (max_image_white_level);
   maximum image white level code value information (max_white_level_code_value);
   reference screen luminance information (ref_screen_lw); and
   white level code value information (white_level_code_value), the maximum image white level information indicating a maximum white level setting of luminance of the image data as a percentage relative to a reference white level setting, the maximum image white level code value information indicating a luminance code value for the maximum white level setting, the reference screen luminance information indicating the reference white level setting, the white level code value information indicating a luminance code value for the reference white level setting, the reference white level setting to be used in a process of developing an image,
   wherein a dynamic range of the encoded image data is adjustable based upon the dynamic range characteristic information.

8. The image processing device of claim 7, wherein the white level code value information is indicative of the luminance code value for the reference white level setting and a plurality of luminance code values for a plurality of white levels.

9. The image processing device of claim 7, wherein the dynamic range characteristic information further includes black level code value information indicting a luminance code value of a black level.

10. The image processing device of claim 7, wherein the dynamic range characteristic information is included in video usability information.

11. The image processing device of claim 7, wherein the dynamic range characteristic information is included in tone_mapping_information SEI (Supplemental enhancement information).

12. The image processing device of claim 7, wherein the dynamic range characteristic information is included in luminance dynamic range SEI.

13. At least one non-transitory computer readable storage medium having stored thereon computer executable instructions, which, when executed by at least one processor, perform an image processing method, the method comprising:

decoding image data to produce decoded image data;
receiving dynamic range characteristic information associated with the encoded image data when a video usability information (VUI) syntax or a sequence parameter set (SPS) syntax having a flag indicating presence/absence of the dynamic range characteristic information associated with the image data indicates the presence of the dynamic range characteristic information, wherein the presence of the dynamic range characteristic information is indicated when the flag is one and the absence of the dynamic range characteristic information is indicated when the flag is zero, the dynamic range characteristic information including:

maximum image white level information, (max_image_white_level);
maximum image white level code value information (max_white_level_code value);
reference screen luminance information (ref_screen_lw); and
white level code value information (white_level_code_value), the maximum image white level information indicating a maximum white level setting of luminance of the image data as a percentage relative to a reference white level setting, the maximum image white level code value information indicating a luminance code value for the maximum white level setting, the reference screen luminance information indicating the reference white level setting, the white level code value information indicating a luminance code value for the reference white level setting, the reference white level setting to be used in a process of developing an image; and
adjusting a dynamic range of the decoded image data based upon the dynamic range characteristic information.

## Patentansprüche

1. Bildverarbeitungsvorrichtung (50), umfassend:
mindestens einen Prozessor, der konfiguriert ist zum:

Decodieren von Bilddaten, um decodierte Bilddaten zu erzeugen;
Erfassen von dynamischen Bereichseigenschaftsinformationen, wenn eine Syntax von Videonutzbarkeitsinformationen (Video Usability Information syntax, VUI-Syntax) oder eine Syntax eines Sequenzparametersatzes (SPS-Syntax), die ein Flag aufweisen, das ein Vorhandensein oder eine Abwesenheit der dynamischen Bereichseigenschaftsinformationen anzeigt, die mit den Bilddaten assoziiert sind, das Vorhandensein der dynamischen Bereichseigenschaftsinformationen anzeigt, wobei das Vorhandensein der dynamischen Bereichseigenschaftsinformationen angezeigt wird, wenn das Flag gleich Eins ist, und wobei die Abwesenheit der dynamischen Bereichseigenschaftsinformationen angezeigt wird, wenn das Flag gleich Null ist, wobei die dynamischen Bereichseigenschaftsinformationen enthalten:

maximale Bildweißwertinformationen (max_image_white_level);
maximale Codewertinformationen eines Bildweißwerts (max_white_level_code_value);
Bezugsbildschirmluminanzinformationen (ref_screen_lw); und
Codewertinformationen eines Bildweißwerts (white_level_code_value), wobei die maximalen Bildweißwertinformationen eine maximale Weißwerteinstellung einer Luminanz der Bilddaten als einen Prozentwert relativ zu einer Bezugsweißwerteinstellung anzeigen, wobei die maximalen Codewertinformationen eines Bildweißwerts einen Luminanzcodewert für die maximale Weißwerteinstellung anzeigen, wobei die Bezugsbildschirmluminanzinformationen die Bezugsweißwerteinstellung anzeigen, wobei die Codewertinformationen eines Weißwerts einen Luminanzcodewert für die Bezugsweißwerteinstellung anzeigen, wobei die Bezugsweißwerteinstellung in einem Prozess zum Entwickeln eines Bildes zu verwenden ist; und
Anpassen eines dynamischen Bereichs der decodierten Bilddaten basierend auf den dynamischen Bereichseigenschaftsinformationen.

2. Bildverarbeitungsvorrichtung nach Anspruch 1, wobei die Codewertinformationen eines Weißwerts den Luminanzcodewert für die Bezugsweißwerteinstellung und eine Vielzahl von Luminanzcodewerten für eine Vielzahl von Weißwerteinstellungen anzeigen.

3. Bildverarbeitungsvorrichtung nach Anspruch 1, wobei die dynamischen Bereichseigenschaftsinformationen außerdem Codewertinformationen eines Schwarzwerts enthalten, die einen Luminanzcodewert eines Schwarzwerts anzeigen.

4. Bildverarbeitungsvorrichtung nach Anspruch 1, wobei die dynamischen Bereichseigenschaftsinformationen in Videonutzbarkeitsinformationen enthalten sind.

5. Bildverarbeitungsvorrichtung nach Anspruch 1, wobei die dynamischen Bereichseigenschaftsinformationen in ergänzenden Erweiterungsinformationen (Supplemental Enhancement Information, SEI) der tone_mapping_information enthalten sind.

6. Bildverarbeitungsvorrichtung nach Anspruch 1, wobei die dynamischen Bereichseigenschaftsinformationen in ergänzenden Erweiterungsinformationen (SEI) eines dynamischen Luminanzbereichs enthalten sind.

7. Bildverarbeitungsvorrichtung (1), umfassend:
mindestens einen Prozessor, der konfiguriert ist zum:

Codieren von Bilddaten, um codierte Bilddaten zu erzeugen;
Bereitstellen von dynamischen Bereichseigenschaftsinformationen, wenn eine Syntax von Videonutzbarkeitsinformationen (Video Usability Information syntax, VUI-Syntax) oder eine Syntax eines Sequenzparametersatzes (SPS-Syntax), die ein Flag aufweisen, das ein Vorhandensein oder eine Abwesenheit von dynamischen Bereichseigenschaftsinformationen anzeigt, die mit den Bilddaten assoziiert sind, das Vorhandensein der dynamischen Bereichseigenschaftsinformationen anzeigt, wobei das Vorhandensein der dynamischen Bereichseigenschaftsinformationen angezeigt wird, wenn das Flag gleich Eins ist, und wobei die Abwesenheit der dynamischen Bereichseigenschaftsinformationen angezeigt wird, wenn das Flag gleich Null ist, wobei die dynamischen Bereichseigenschaftsinformationen enthalten:

maximale Bildweißwertinformationen (max_image_white_level);
maximale Codewertinformationen eines Bildweißwerts (max_white_level_code_value);
Bezugsbildschirmluminanzinformationen (ref_screen_lw); und
Codewertinformationen eines Bildweißwerts (white_level_code_value), wobei die maximalen Bildweißwertinformationen eine maximale Weißwerteinstellung einer Luminanz der Bilddaten als einen Prozentwert relativ zu einer Bezugsweißwerteinstellung anzeigen, wobei die maximalen Codewertinformationen eines Bildweißwerts einen Luminanzcodewert für die maximale Weißwerteinstellung anzeigen, wobei die Bezugsbildschirmluminanzinformationen die Bezugsweißwerteinstellung anzeigen, wobei die Codewertinformationen eines Weißwerts einen Luminanzcodewert für die Bezugsweißwerteinstellung anzeigen, wobei die Bezugsweißwerteinstellung in einem Prozess zum Entwickeln eines Bildes zu verwenden ist;
wobei ein dynamischer Bereich der codierten Bilddaten basierend auf den dynamischen Bereichseigenschaftsinformationen anpassbar ist.

8. Bildverarbeitungsvorrichtung nach Anspruch 7, wobei die Codewertinformationen eines Weißwerts den Luminanzcodewert für die Bezugsweißwerteinstellung und eine Vielzahl von Luminanzcodewerten für eine Vielzahl von Weißwerten anzeigen.

9. Bildverarbeitungsvorrichtung nach Anspruch 7, wobei die dynamischen Bereichseigenschaftsinformationen außerdem Codewertinformationen eines Schwarzwerts enthalten, die einen Luminanzcodewert eines Schwarzwerts anzeigen.

10. Bildverarbeitungsvorrichtung nach Anspruch 7, wobei die dynamischen Bereichseigenschaftsinformationen in Videonutzbarkeitsinformationen enthalten sind.

11. Bildverarbeitungsvorrichtung nach Anspruch 7, wobei die dynamischen Bereichseigenschaftsinformationen in ergänzenden Erweiterungsinformationen (Supplemental Enhancement Information, SEI) der tone_mapping_information enthalten sind.

12. Bildverarbeitungsvorrichtung nach Anspruch 7, wobei die dynamischen Bereichseigenschaftsinformationen in den SEI eines dynamischen Luminanzbereichs enthalten sind.

13. Mindestens ein nichtflüchtiges computerlesbares Speichermedium, in dem in einem Computer ausführbare Befehle gespeichert sind, die, wenn sie von mindestens einem Prozessor ausgeführt werden, ein Bildverarbeitungsverfahren durchführen, wobei das Verfahren umfasst:

Decodieren von Bilddaten, um decodierte Bilddaten zu erzeugen;
Erfassen von dynamischen Bereichseigenschaftsinformationen, die mit den codierten Bilddaten assoziiert sind, wenn eine Syntax von Videonutzbarkeitsinformationen (Video Usability Information syntax, VUI-Syntax) oder eine Syntax eines Sequenzparametersatzes (SPS-Syntax), die ein Flag aufweisen, das ein Vorhandensein oder eine Abwesenheit der dynamischen Bereichseigenschaftsinformationen anzeigt, die mit den Bilddaten assoziiert sind, das Vorhandensein der dynamischen Bereichseigenschaftsinformationen anzeigt, wobei das Vorhandensein der dynamischen Bereichseigenschaftsinformationen angezeigt wird, wenn das Flag gleich Eins ist, und wobei die Abwesenheit der dynamischen Bereichseigenschaftsinformationen angezeigt wird, wenn das Flag gleich Null ist, wobei die dynamischen Bereichseigenschaftsinformationen enthalten:

maximale Bildweißwertinformationen (max_image_white_level);
maximale Codewertinformationen eines Bildweißwerts (max_white_level_code_value);
Bezugsbildschirmluminanzinformationen (ref_screen_lw); und
Codewertinformationen eines Bildweißwerts (white_level_code_value),
wobei die maximalen Bildweißwertinformationen eine maximale Weißwerteinstellung einer Luminanz der Bilddaten als einen Prozentwert relativ zu einer Bezugsweißwerteinstellung anzeigen, wobei die maximalen Codewertinformationen eines Bildweißwerts einen Luminanzcodewert für die maximale Weißwerteinstellung anzeigen, wobei die Bezugsbildschirmluminanzinformationen die Bezugsweißwerteinstellung anzeigen, wobei die Codewertinformationen eines Weißwerts einen Luminanzcodewert für die Bezugsweißwerteinstellung anzeigen, wobei die Bezugsweißwerteinstellung in einem Prozess zum Entwickeln eines Bildes zu verwenden ist; und
Anpassen eines dynamischen Bereichs der decodierten Bilddaten basierend auf den dynamischen Bereichseigenschaftsinformationen.

## Revendications

1. Dispositif de traitement d'image (50), comprenant :
   au moins un processeur configuré pour :

   décoder des données d'image pour produire des données d'image décodées ;
   acquérir des informations caractéristiques de plage dynamique lorsqu'une syntaxe d'informations sur l'aptitude à l'emploi vidéo (VUI) ou une syntaxe de jeu de paramètres de séquence (SPS) comportant un indicateur indiquant la présence/l'absence des informations caractéristiques de plage dynamique associées aux données d'image indique la présence des informations caractéristiques de plage dynamique, dans lequel la présence des informations caractéristiques de plage dynamique est indiquée lorsque l'indicateur est à un et l'absence des informations caractéristiques de plage dynamique est indiquée lorsque l'indicateur est à zéro, les informations caractéristiques de plage dynamique comprenant :

   des informations de niveau de blanc d'image maximum (max_image_white_level) ;
   des informations de valeur de code de niveau de blanc d'image maximum (max_white_level_code_value) ;
   des informations de luminance d'écran de référence (ref_screen_lw) ; et
   des informations de valeur de code de niveau de blanc (white_level _code_value), les informations de niveau de blanc d'image maximum indiquant un réglage de niveau de blanc maximum de la luminance des données d'image en pourcentage par rapport à un réglage de niveau de blanc de référence, les informations de valeur de code de niveau de blanc d'image maximum indiquant une valeur de code de luminance pour le réglage de niveau de blanc maximum, les informations de luminance d'écran de référence indiquant le réglage de niveau de blanc de référence, les informations de valeur de code de niveau de blanc indiquant une valeur de code de luminance pour le réglage de niveau de blanc de référence, le réglage de niveau de blanc de référence devant être utilisé dans un processus de développement d'une image ; et
   ajuster une plage dynamique des données d'image décodées sur la base des informations caractéristiques de plage dynamique.

2. Dispositif de traitement d'image selon la revendication 1, dans lequel les informations de valeur de code de niveau de blanc sont indicatives de la valeur de code de luminance pour le réglage de niveau de blanc de référence et d'une pluralité de valeurs de code de luminance pour une pluralité de réglages de niveau de blanc.

**3.** Dispositif de traitement d'image selon la revendication 1, dans lequel les informations caractéristiques de plage dynamique comprennent en outre des informations de valeur de code de niveau de noir indiquant une valeur de code de luminance d'un niveau de noir.

**4.** Dispositif de traitement d'image selon la revendication 1, dans lequel les informations caractéristiques de plage dynamique sont incluses dans des informations sur l'aptitude à l'emploi vidéo.

**5.** Dispositif de traitement d'image selon la revendication 1, dans lequel les informations caractéristiques de plage dynamique sont incluses dans des Informations SEI d'Amélioration Complémentaires (Supplemental Enhancement Information pour Informations d'Amélioration Supplémentaires) de correspondance des tons, tone_mapping_information.

**6.** Dispositif de traitement d'image selon la revendication 1, dans lequel les informations caractéristiques de plage dynamique sont incluses dans des Informations d'Amélioration Complémentaires (SEI) de plage dynamique de luminance.

**7.** Dispositif de traitement d'image (1), comprenant :
au moins un processeur configuré pour :

coder des données d'image pour produire des données d'image codées ;
fournir des informations caractéristiques de plage dynamique lorsqu'une syntaxe d'informations sur l'aptitude à l'emploi vidéo (VUI) ou une syntaxe de jeu de paramètres de séquence (SPS) comportant un indicateur indiquant la présence/l'absence d'informations caractéristiques de plage dynamique associées aux données d'image indique la présence d'informations caractéristiques de plage dynamique, dans lequel la présence des informations caractéristiques de plage dynamique est indiquée lorsque l'indicateur est à un et l'absence des informations caractéristiques de plage dynamique est indiquée lorsque l'indicateur est à zéro, les informations caractéristiques de plage dynamique comprenant :

des informations de niveau de blanc d'image maximum (max_image_white_level) ;
des informations de valeur de code de niveau de blanc d'image maximum (max_white_level_code_value) ;
des informations de luminance d'écran de référence (ref_screen_lw) ; et
des informations de valeur de code de niveau de blanc (white_level_code_value), les informations de niveau de blanc d'image maximum indiquant un réglage de niveau de blanc maximum de la luminance des données d'image en pourcentage par rapport à un réglage de niveau de blanc de référence, les informations de valeur de code de niveau de blanc d'image maximum indiquant une valeur de code de luminance pour le réglage de niveau de blanc maximum, les informations de luminance d'écran de référence indiquant le réglage de niveau de blanc de référence, les informations de valeur de code de niveau de blanc indiquant une valeur de code de luminance pour le réglage de niveau de blanc de référence, le réglage de niveau de blanc de référence devant être utilisé dans un processus de développement d'une image,
dans lequel une plage dynamique des données d'image codées peut être ajustée sur la base des informations caractéristiques de plage dynamique.

**8.** Dispositif de traitement d'image selon la revendication 7, dans lequel les informations de valeur de code de niveau de blanc sont indicatives de la valeur de code de luminance pour le réglage de niveau de blanc de référence et d'une pluralité de valeurs de code de luminance pour une pluralité de niveaux de blanc.

**9.** Dispositif de traitement d'image selon la revendication 7, dans lequel les informations caractéristiques de plage dynamique comprennent en outre des informations de valeur de code de niveau de noir indiquant une valeur de code de luminance d'un niveau de noir.

**10.** Dispositif de traitement d'image selon la revendication 7, dans lequel les informations caractéristiques de plage dynamique sont incluses dans des informations sur l'aptitude à l'emploi vidéo.

**11.** Dispositif de traitement d'image selon la revendication 7, dans lequel les informations caractéristiques de plage dynamique sont incluses dans des informations SEI (Supplemental Enhancement Information) de correspondance des tons, tone_mapping_information.

**12.** Dispositif de traitement d'image selon la revendication 7, dans lequel les informations caractéristiques de plage dynamique sont incluses dans des informations SEI de plage dynamique de luminance.

13. Au moins un support de stockage lisible par ordinateur non transitoire sur lequel sont stockées des instructions exécutables par ordinateur qui, lorsqu'elles sont exécutées par au moins un processeur, mettent en œuvre un procédé de traitement d'image, le procédé comprenant les étapes suivantes :

décoder des données d'image pour produire des données d'image décodées ;
recevoir des informations caractéristiques de plage dynamique associées aux données d'image codées lorsqu'une syntaxe d'informations d'utilisation vidéo (VUI) ou une syntaxe de jeu de paramètres de séquence (SPS) comportant un indicateur indiquant la présence/l'absence des informations caractéristiques de plage dynamique associées aux données d'image indique la présence des informations caractéristiques de plage dynamique, dans lequel la présence des informations caractéristiques de plage dynamique est indiquée lorsque l'indicateur est à un et l'absence des informations caractéristiques de plage dynamique est indiquée lorsque l'indicateur est à zéro, les informations caractéristiques de plage dynamique comprenant :

des informations de niveau de blanc d'image maximum (max_image_white_level) ;
des informations de valeur de code de niveau de blanc d'image maximum (max_white_level_code_value) ;
des informations de luminance d'écran de référence (ref_screen_lw) ; et
des informations de valeur de code de niveau de blanc (white_level_code_value), les informations de niveau de blanc d'image maximum indiquant un réglage de niveau de blanc maximum de la luminance des données d'image en pourcentage par rapport à un réglage de niveau de blanc de référence, les informations de valeur de code de niveau de blanc d'image maximum indiquant une valeur de code de luminance pour le réglage de niveau de blanc maximum, les informations de luminance d'écran de référence indiquant le réglage de niveau de blanc de référence, les informations de valeur de code de niveau de blanc indiquant une valeur de code de luminance pour le réglage de niveau de blanc de référence, le réglage de niveau de blanc de référence devant être utilisé dans un processus de développement d'une image ; et
ajuster une plage dynamique des données d'image décodées sur la base des informations caractéristiques de plage dynamique.

## FIG. 1

| sei...payload(payloadType. payloadSize) { | Descriptor |
|---|---|
| if(payloadType == 0) | |
| buffering_period(payloadSize) | |
| else if(payloadType == 1) | |
| pic_timing(payloadSize) | |
| else if(payloadType == 2) | |
| pen_scan...rect(payloadSize) | |
| else if(payloadType == 3) | |
| filler_payload(payloadSize) | |
| else if(payloadType == 4) | |
| user_data_registered_itu_t_t35(payloadSize) | |
| else if(payloadType == 5) | |
| user_data_unregistered(payloadSize) | |
| else if(payloadType == 6) | |
| recovery_point(payloadSize) | |
| else if(payloadType == 9) | |
| scene_into(payloadSize) | |
| else if(payloadType == 15) | |
| full...frame...snapshot(payloadSize) | |
| else if(payloadType == 16) | |
| progressive_refinement_segment_start(payloadSize) | |
| else if(payloadType == 17) | |
| progressive_refinement_segment_end(payloadSize) | |
| else if(payloadType == 19) | |
| film...grain...characteristics(payloadSize) | |
| else if(payloadType == 20) | |
| deblocking...filter...display...preference(payloadSize) | |
| else if(payloadType == 22) | |
| post_filter_hint(payloadSize) | |
| else if(payloadType == 23) | |
| tone_mapping_info(payloadSize) | |
| else if(payloadType == 45) | |
| frame_packing_arrangement(payloadSize) | |
| else if(payloadType == 47) | |
| display_orientation(payloadSize) | |
| else if(payloadType == 128) | |
| sop_description(payloadSize) | |
| else if(payloadType == 129) | |
| field_indication(payloadSize) | |
| else if(payloadType == 130) | |
| decoded_picture_hash(payloadSize) | |
| else | |
| reserved_sei_message(payloadSize) | |
| if(!byte_aligned()) { | |
| bit...equal...to...one/*equal to 1*/ | f(1) |
| while(!byte_aligned()) | |
| bit_equal_to_zero/*equal to 0*/ | f(1) |
| } | |
| } | |

## FIG. 2

| tone_mapping_info(payloadSize) { | C | Descriptor |
|---|---|---|
| tone_map_id | 5 | ue(v) |
| tone_map_cancel_flag | 5 | u(1) |
| if(!tone_map_cancel_flag) { | | |
| tone_map_repetition_period | 5 | ue(v) |
| coded_data_bit_depth | 5 | u(8) |
| target_bit_depth | 5 | u(8) |
| model_id | 5 | ue(v) |
| if(model_id==0) { | | |
| min_value | 5 | u(32) |
| max_value | 5 | u(32) |
| } | | |
| if(model_id==1) { | | |
| sigmoid_midpoint | 5 | u(32) |
| sigmoid_width | 5 | u(32) |
| } | | |
| if(model_id==2) { | | |
| for(i=0;i<(1<<target_bit_depth);i++) | | |
| start_of_coded_interval[i] | 5 | u(v) |
| if(model_id==3) { | | |
| num_pivots | 5 | u(16) |
| for(i=0;i<num_pivots;i++) { | | |
| coded_pivot_value[i] | 5 | u(v) |
| target_pivot_value[i] | 5 | u(v) |
| } | | |
| } | | |
| } | | |
| } | | |

## FIG. 3

FIG. 4

INPUT SIGNAL → A/D CONVERTER (11) → SCREEN REARRANGEMENT BUFFER (12) → + (13) → ORTHOGONAL TRANSFORM UNIT (14) → QUANTIZATION UNIT (15) → LOSSLESS ENCODING UNIT (16) → ACCUMULATION BUFFER (17) → ENCODED DATA

RATE CONTROL UNIT (27)

INVERSE QUANTIZATION UNIT (18)

INVERSE ORTHOGONAL TRANSFORM UNIT (19)

+ (20)

DEBLOCKING FILTER (21)

ADAPTIVE OFFSET FILTER (41)

ADAPTIVE LOOP FILTER (42)

MOTION PREDICTION/COMPENSATION UNIT (25)

PREDICTED IMAGE SELECTION UNIT (26)

INTRA PREDICTION UNIT (24)

(23)

FRAME MEMORY (22)

2

EP 3 512 203 B1

EP 3 512 203 B1

## FIG. 5

Digital code of developed image

FIG. 6

Digital code of developed image

max_white_level_code_value ← 940

white_level_code_value ←

Range

black_level_code_value ← 64

1024

white_level of captured image

100% 200% 300% 400% 500% 600% 700% 800%

white_level_code_value_0

white_level_code_value_1

white_level_code_value_2

white_level_code_value_3 white_level_code_value_4

camera_iso_sensitivity
max_image_white_level

EP 3 512 203 B1

## FIG. 7

camera_iso_sensitivity specifies the ISO speed(ISO 12232:2006)assigned by the camera at the time of image capturing.

output_exposure_index specifies the exposure index(TEC 62494-1)setting used at image developing process.

screen_lw specifies reference screen luminance for white level setting used at image developing process in units of $cd/m^2$.

black level_code_value specifies the luma sample value of the coded data in which the black level is assigned.

gray_level_code_value specifies the luma sample value of the coded data in which the gray level is assigned.

whitle_level_code value specifies the luma sample value of the coded data in which the white level is assigned.

max_whitle_level_code value specifies the luma sample value of the coded data in which the maximum video white level is assigned.

EP 3 512 203 B1

# FIG. 8

| tone_mapping_info(payloadSize) { | Descriptor |
|---|---|
|   tone_map_id | ue(v) |
|   tone_map_cancel_flag | u(1) |
|   if(!tone_map_cancel_flag) { | |
|     tone_map_repetition_period | ue(v) |
|     coded_data_bit_depth | u(8) |
|     target_bit_depth | u(8) |
|     model_id | ue(v) |
|     if(model_id==0) { | |
|       min_value | u(32) |
|       max_value | u(32) |
|     } | |
|     if(model_id==1) { | |
|       sigmoid_midpoint | u(32) |
|       sigmoid_width | u(32) |
|     } | |
|     if(model_id==2) { | |
|       for(i=0;i<(1<<target_bit_depth);i++) | |
|         start_of_coded_interval[i] | u(v) |
|     if(model_id==3) { | |
|       num_pivots | u(16) |
|       for(i=0;i<num_pivots;i++) { | |
|         coded_pivot_value[i] | u(v) |
|         target_pivot_value[i] | u(v) |
|       } | |
|     if(model_id==4) { | |
|       camera_iso_sensitivity | TBD |
|       output_exposure_index | TBD |
|       ref_screen_lw | TBD |
|       max_image_white_level | TBD |
|       black_level_code_value | TBD |
|       white_level_code_value | TBD |
|       max_white_level_code_value | TBD |
|     } | |
|   } | |
| } | |

## FIG. 9

| tone_mapping_info(payloadSize) { | Descriptor |
|---|---|
| tone_map_id | ue(v) |
| tone_map_cancel_flag | u(1) |
| if(!tone_map_cancel_flag) { | |
| tone_map_repetition_period | ue(v) |
| coded_data_bit_depth | u(8) |
| target_bit_depth | u(8) |
| model_id | ue(v) |
| if(model_id==0) { | |
| min_value | u(32) |
| max_value | u(32) |
| } | |
| if(model_id==1) { | |
| sigmoid_midpoint | u(32) |
| sigmoid_width | u(32) |
| } | |
| if(model_id==2) | |
| for(i=0;i<(1<<target_bit_depth);i++) | |
| start_of_coded_interval[i] | u(v) |
| if(model_id==3) { | |
| num_pivots | u(16) |
| for(i=0;i<num_pivots;i++) { | |
| coded_pivot_value[i] | u(v) |
| target_pivot_value[i] | u(v) |
| } | |
| if(model_id==4) { | |
| camera_iso_sensitivity_idc | u(8) |
| If(camera_iso_sensitivity_idc==Extended_TSO) | |
| camera_iso_sensitivity | u(v) |
| exposure_index_idc | u(8) |
| If(exposure_index_idc==Extended_TSO) | |
| exposure_index_rating | u(v) |
| sign_image_exposure_value | u(1) |
| image_exposure_value0 | u(v) |
| image_exposure_value1 | u(v) |
| ref_screen_lw | u(v) |
| max_image_white_level | u(v) |
| black_level_code_value | u(8) |
| white_level_code_value | u(8) |
| max_white_level_code_value | u(8) |
| } | |
| } | |
| } | |

# FIG. 10

| Indicator | ISO number |
|-----------|------------|
| 0 | Unspecified |
| 1 | 10 |
| : | : |
| : | : |
| 31-254 | Reserved |
| 255 | Extended_ISO |

## FIG. 11

| luminance_dynamic_range_info(payloadSize) { | Descriptor |
|---|---|
|   tone_map_id | ue(v) |
|   tone_map_cancel_flag | u(1) |
|   if(!tone...map...cancel...flag) { | |
|     tone_map_repetition_period | ue(v) |
|     coded_data_bit_depth | u(8) |
|     target_bit_depth | u(8) |
|     camera_iso_sensitivity | TBD |
|     output_exposure_index | TBD |
|     ref_screen_lw | TBD |
|     max_image_white_level | TBD |
|     black_level_code_value | TBD |
|     white_level_code_value | TBD |
|     max_white_level_code_value | TBD |
|   } | |
| } | |

EP 3 512 203 B1

## FIG. 12

| vui_parameters(){ | Descriptor |
|---|---|
|     aspect_ratio_info_present_flag | u(1) |
|     ... | |
|     neutral_chroma_indication_flag | u(1) |
|     field_indication_presence_flag | u(1) |
|     tone_mapping_flag | u(1) |
|     timing_info_present_flag | u(1) |
|     ... | |
| } | |

EP 3 512 203 B1

## FIG. 13

| vui_parameters() { | Descriptor |
|---|---|
| aspect_ratio_info_present_flag | u(1) |
| ... | |
| neutral_chroma_indication_flag | u(1) |
| field_indication_presence_flag | u(1) |
| luminance_dynamic_range_flag | u(1) |
| timing_info_present_flag | u(1) |
| ... | |
| } | |

EP 3 512 203 B1

# FIG. 14

| vui_parameters() { | Descriptor |
|---|---|
| aspect_ratio_info_present_flag | u(1) |
| ... | |
| neutral_chroma_indication_flag | u(1) |
| field_indication_presence_flag | u(1) |
| **tone_mapping_flag** | **u(1)** |
| if(tone_mapping_flag) { | |
| camera_iso_sensitivity_idc | u(8) |
| if(camera_iso_sensitivity==Extended_ISO) | |
| camera_iso_sensitivity | u(v) |
| exposure_index_idc | u(8) |
| if(exposure_index_idc==Extended_ISO) | |
| exposure_index_rating | u(v) |
| sign_image_exposure_value | u(1) |
| image_exposure_value0 | u(v) |
| image_exposure_value1 | u(v) |
| ref_screen_lw | u(v) |
| max_image_white_level | u(v) |
| black_level_code_value | u(8) |
| white_level_code_value | u(8) |
| max_white_level_code_value | u(8) |
| } | |
| timing_info_present_flag | u(1) |
| ... | |
| } | |

# FIG. 15

| xxxxx( ){ | Descriptor |
|---|---|
| ... | |
|    camera_iso_sensitivity_idc | u(8) |
|   if(camera_iso_sensitivity==Extended_ISO) | |
|     camera_iso_sensitivity | u(v) |
|   exposure_index_idc | u(8) |
|   if(exposure_index_idc==Extended_ISO) | |
|     exposure_index_rating | u(v) |
|   sign_image_exposure_value | u(1) |
|   image_exposure_value0 | u(v) |
|   image_exposure_value1 | u(v) |
|   ref_screen_lw | u(v) |
|   max_image_white_level | u(v) |
|   black_level_code_value | u(8) |
|   white_level_code_value | u(8) |
|   max_white_level_code_value | u(8) |
|   roi_luminance_range_flag | u(1) |
|   if(roi_luminance_range_flag) | |
|     min_roi_luminance_range | u(8) |
|     max_roi_luminance_range | u(8) |
|     roi_region_x | u(4) |
|     roi_region_y | u(4) |
|     roi_region_x_offset | u(v) |
|     roi_region_y_offset | u(v) |
|   } | |
| } | |

# FIG. 16

```
( START GENERATION OPERATION )
            │
            ▼
┌─────────────────────────────┐ ⌐S1
│     ENCODING OPERATION      │
└─────────────────────────────┘
            │
            ▼
┌─────────────────────────────┐ ⌐S2
│          SET SPS            │
└─────────────────────────────┘
            │
            ▼
┌─────────────────────────────┐ ⌐S3
│          SET PPS            │
└─────────────────────────────┘
            │
            ▼
        ╱IS ENCODING╲           ⌐S4
      ╱ TARGET IMAGE HDR ╲                     NO
      ╲    IMAGE?        ╱  ──────────────────────────┐
        ╲             ╱                               │
            │ YES                                      │
            ▼                                          ▼
┌─────────────────────────┐ ⌐S5   ┌─────────────────────────┐ ⌐S7
│  SET VU1 INCLUDING 1    │       │   SET VU1 INCLUDING 0    │
│   AS HDR IMAGE FLAG     │       │    AS HDR IMAGE FLAG     │
└─────────────────────────┘       └─────────────────────────┘
            │                                          │
            ▼                                          │
┌─────────────────────────┐ ⌐S6                        │
│    SET HDR IMAGE SEI    │                            │
└─────────────────────────┘                            │
            │◄─────────────────────────────────────────┘
            ▼
┌─────────────────────────┐ ⌐S8
│  GENERATE ENCODED STREAM │
└─────────────────────────┘
            │
            ▼
┌─────────────────────────┐ ⌐S9
│  TRANSMIT ENCODED STREAM │
└─────────────────────────┘
            │
            ▼
          ( END )
```

# FIG. 17

START ENCODING OPERATION

PERFORM A/D CONVERSION — S11

PERFORM REARRANGEMENT — S12

PERFORM INTRA PREDICTION OPERATION
PERFORM MOTION PREDICTION/
COMPENSATION OPERATION — S13

DETERMINE OPTIMUM PREDICTION MODE
BASED ON COST FUNCTION VALUE — S14

S15
IS OPTIMUM
PREDICTION MODE OPTIMUM
INTER PREDICTION
MODE?
NO

YES

SUPPLY INTER PREDICTION MODE
INFORMATION, MOTION VECTOR AND
INFORMATION FOR SPECIFYING REFERENCE
IMAGE TO LOSSLESS ENCODING UNIT — S16

SUPPLY INTRA PREDICTION
MODE INFORMATION TO
LOSSLESS ENCODING UNIT — S17

SUBTRACT PREDICTED IMAGE FROM IMAGE — S18

PERFORM ORTHOGONAL TRANSFORM ON
RESIDUAL ERROR INFORMATION — S19

QUANTIZE COEFFICIENT — S20

1

# FIG. 18

(1)

| INVERSELY QUANTIZE QUANTIZED COEFFICIENT | S21 |

| PERFORM INVERSE ORTHOGONAL TRANSFORM ON COEFFICIENT | S22 |

| ADD RESIDUAL ERROR INFORMATION AND PREDICTED IMAGE | S23 |

| PERFORM DEBLOCKING FILTERING OPERATION | S24 |

| PERFORM ADAPTIVE OFFSET FILTERING OPERATION | S25 |

| PERFORM ADAPTIVE LOOP FILTERING OPERATION | S26 |

| STORE FILTERED IMAGE | S27 |

| PERFORM LOSSLESS ENCODING ON ENCODING INFORMATION | S28 |

| PERFORM LOSSLESS ENCODING OF QUANTIZED COEFFICIENT | S29 |

| STORE ENCODED DATA | S30 |

| OUTPUT ENCODED DATA | S31 |

RETURN

FIG. 19

RECEIVING UNIT — 51
DEMULTIPLEXING UNIT — 52
DECODING UNIT — 53
IMAGE ADJUSTING UNIT — 54
DISPLAY CONTROL UNIT — 55
DISPLAY UNIT — 56

50

# FIG. 20

# FIG. 21

```
( START DISPLAY OPERATION )
            │
            ▼
┌─────────────────────────────┐
│   RECEIVE ENCODED STREAM    │─S50
└─────────────────────────────┘
            │
            ▼
┌─────────────────────────────┐
│ DEMULTIPLEX ENCODED STREAM  │─S51
└─────────────────────────────┘
            │
            ▼
┌─────────────────────────────┐
│     DECODING OPERATION      │─S52
└─────────────────────────────┘
            │
            ▼           S53
        ◇─────────────────────────◇
       ╱                           ╲
      ◇    IS HDR IMAGE FLAG 1?     ◇──────┐
       ╲                           ╱       NO
        ◇─────────────────────────◇        │
            │ YES                           │
            ▼                               │
┌─────────────────────────────┐            │
│      ACQUIRE DYNAMIC         │─S54        │
│     RANGE INFORMATION        │            │
└─────────────────────────────┘            │
            │                               │
            ▼                               │
┌─────────────────────────────┐            │
│  ADJUST DYNAMIC RANGE OF     │─S55        │
│ IMAGE ACCORDING TO DISPLAY   │            │
│      DYNAMIC RANGE           │            │
└─────────────────────────────┘            │
            │                               │
            ▼◄──────────────────────────────┘
┌─────────────────────────────┐
│     DISPLAY DISPLAY IMAGE    │─S56
└─────────────────────────────┘
            │
            ▼
          ( END )
```

# FIG. 22

START DECODING OPERATION

STORE ENCODED DATA —S111

PERFORM LOSSLESS DECODING ON ENCODED DATA —S112

INVERSELY QUANTIZE QUANTIZED COEFFICIENT —S113

IS INTER PREDICTION MODE INFORMATION SUPPLIED? —S114

NO → PERFORM INTRA PREDICTION OPERATION —S116

YES → PERFORM MOTION COMPENSATION OPERATION —S115

PERFORM INVERSE ORTHOGONAL TRANSFORM ON COEFFICIENT —S117

ADD RESIDUAL ERROR INFORMATION AND PREDICTED IMAGE —S118

PERFORM DEBLOCKING FILTERING OPERATION —S119

PERFORM ADAPTIVE OFFSET FILTERING OPERATION —S120

PERFORM ADAPTIVE LOOP FILTERING OPERATION —S121

STORE IMAGES BEFORE AND AFTER FILTERING —S122

PERFORM REARRANGEMENT —S123

PERFORM D/A CONVERSION —S124

RETURN

# FIG. 23

FIG. 24

EP 3 512 203 B1

## FIG. 25

RECEIVING UNIT — 51

DEMULTIPLEXING UNIT — 52

DECODING UNIT — 261

IMAGE ADJUSTING UNIT — 54

DISPLAY CONTROL UNIT — 55

DISPLAY UNIT — 56

251

# FIG. 26

EP 3 512 203 B1

# FIG. 27

base view
view_id=0

I   B2   B1   B2   B0   B2   B1   B2   P

non-base view
view_id=1

I   B2   B1   B2   B0   B2   B1   B2   P

non-base view
view_id=2

I   B2   B1   B2   B0   B2   B1   B2   P

EP 3 512 203 B1

FIG. 28

EP 3 512 203 B1

FIG. 29

EP 3 512 203 B1

# FIG. 30

non base layer
layer_id=2

non-base layer
layer_id=1

base layer
layer id=0

I   B2   B1   B2   B0   B2   B1   B2   P

I   B1   B0   B1   P

I   B1   B0   B1   P

# FIG. 31

## FIG. 32

HIERARCHICAL IMAGE ENCODED STREAM → [631 INVERSE MULTIPLEXING UNIT]

BASE LAYER IMAGE ENCODED STREAM → [632 DECODING UNIT] → BASE LAYER IMAGE

DYNAMIC RANGE CHARACTERISTICS INFORMATION

NON-BASE LAYER IMAGE ENCODED STREAM → [633 DECODING UNIT] → NON-BASE LAYER IMAGE

630

EP 3 512 203 B1

# FIG. 33

EP 3 512 203 B1

## FIG. 34

## FIG. 35

## FIG. 36

EP 3 512 203 B1

*FIG. 37*

961

962 IMAGING UNIT → 963 CAMERA SIGNAL PROCESSING UNIT → 964 IMAGE DATA PROCESSING UNIT → 965 DISPLAY UNIT

969 OSD UNIT

967 MEMORY UNIT

971 USER I/F UNIT → 970 CONTROL UNIT

972

966 EXTERNAL I/F UNIT

968 MEDIA DRIVE

960

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1845704 A2

**Non-patent literature cited in the description**

- **BENJAMIN BROSS ; WOO-JIN HAN ; JENS-RAINER OHM ; GARY J. SULLIVAN ; THOMAS WIEGAND.** High efficiency video coding (HEVC) text specification draft 7. *JCTVC-I1003 ver5,* 12 June 2012

- **ZICONG MAI et al.** Optimizing a Tone Curve for Backward Compatible High Dynamic Range Image and Video Compression. *IEEE TRANSACTIONS ON IMAGE PROCESSING, PISCATAWAY, NJ, US,* 01 June 2011, vol. 20, 1558-1571